# FASCICULE DE BREVET EUROPEEN

(11) **EP 2 887 263 B1**
(45) Date de publication et mention de la délivrance du brevet: **08.02.2017**
(21) Numéro de dépôt: 14197495.6
(22) Date de dépôt: 11.12.2014
(51) Int. Cl.: G06K 9/00, H04L 9/00

(54) **Éléments secondaires dans un encodage de type fuzzy vault**
Sekundäre Elemente in einer Kodierung vom Typ Fuzzy Vault
Secondary elements in fuzzy vault encoding

(30) Priorité: 19.12.2013 FR 1363100
(43) Date de publication de la demande: 24.06.2015
(73) Titulaire: Morpho, 92130 Issy-les-Moulineaux (FR)
(72) Inventeur: Bringer, Julien, 92130 ISSY LES MOULINEAUX (FR); Favre, Mélanie, 92130 ISSY LES MOULINEAUX (FR)
(74) Mandataire: Cabinet Plasseraud

(56) Documents cités:
- WO-A1-2013/135846
- BRINGER JULIEN ET AL: "Adding localization information in a fingerprint binary feature vector representation", SENSING TECHNOLOGIES FOR GLOBAL HEALTH, MILITARY MEDICINE, DISASTER RESPONSE, AND ENVIRONMENTAL MONITORING; AND BIOMETRIC TECHNOLOGY FOR HUMAN IDENTIFICATION VIII, SPIE, 1000 20TH ST. BELLINGHAM WA 98225-6705 USA, vol. 8029, no. 1, 13 mai 2011 (2011-05-13) , pages 1-10, XP060014506, DOI: 10.1117/12.884787
- ULUDAG U ET AL: "Securing Fingerprint Template: Fuzzy Vault with Helper Data", COMPUTER VISION AND PATTERN RECOGNITION WORKSHOP, 2006 CONFERENCE ON NEW YORK, NY, USA 17-22 JUNE 2006, PISCATAWAY, NJ, USA,IEEE, PISCATAWAY, NJ, USA, 17 juin 2006 (2006-06-17), pages 163-163, XP010922678, DOI: 10.1109/CVPRW.2006.185 ISBN: 978-0-7695-2646-1
- HARTLOFF JESSE ET AL: "Towards fingerprints as strings: Secure indexing for fingerprint matching", 2013 INTERNATIONAL CONFERENCE ON BIOMETRICS (ICB), IEEE, 4 juin 2013 (2013-06-04), pages 1-6, XP032491274, DOI: 10.1109/ICB.2013.6612973
- ARI JUELS ET AL: "A Fuzzy Vault Scheme", DESIGNS, CODES AND CRYPTOGRAPHY, KLUWER ACADEMIC PUBLISHERS, BO, vol. 38, no. 2, 1 février 2006 (2006-02-01), pages 237-257, XP019205891, ISSN: 1573-7586, DOI: 10.1007/S10623-005-6343-Z

## Description

L'invention concerne le domaine de l'encodage, et plus particulièrement celui de l'encodage de type dit « Fuzzy Vault » décrit par A. Juels et M. Sudan (A Fuzzy Vault Scheme, ISIT 2002).

Un encodage de type Fuzzy Vault est une technique de calcul sécurisé d'intersection d'ensemble qui consiste à bloquer une information secrète à l'aide d'un ensemble d'éléments tirés d'un univers public. L'information secrète est représentée par un polynôme P de degré inférieur à k sur un corps fini Fq. Au moment de l'enrôlement, le polynôme P est évalué sur les points de l'ensemble d'entrée. Cette information est ensuite noyée par du bruit.

Au moment de la vérification, si l'ensemble présenté est suffisamment proche de celui d'entrée, le polynôme P peut être retrouvé par interpolation.

Un exemple d'utilisation de l'encodage de type Fuzzy Vault est le suivant. Alice est une amatrice de films et souhaite rencontrer des personnes qui ont les mêmes goûts qu'elle. Elle encode son numéro de téléphone (donnée secrète) sur k=14 symboles (polynôme de degré au plus 13). L'ensemble A de ses n=22 films préférés sert à bloquer le schéma. Grâce au Fuzzy Vault, Bob peut débloquer le numéro d'Alice s'il fourni un ensemble B de films dont au moins (n+k)/2=18 sont communs avec ceux d'Alice.

Un autre exemple concerne l'utilisation de l'encodage pour des données biométriques. Il est connu d'utiliser un vecteur binaire d'un trait biométrique comme donnée servant au blocage. Par exemple le codage proposé par J. Bringer et V. Despiegel dans « Binary feature vector representation from minutiae vicinities » (BTAS 2010) permet d'obtenir un vecteur binaire de taille N fixe à partir d'une empreinte digitale. Les bits à 1 du vecteur indiquent la présence d'un représentant de voisinages de minuties dans l'empreinte, les bits à 0 indiquant l'absence du représentant correspondant. On peut ainsi décrire une authentification par Fuzzy Vault de la façon suivante.

Au stade de l'enrôlement, pour chaque élément binaire d'index i compris entre 1 et N du vecteur binaire, si cet élément binaire est égal à 1, alors le vecteur Fuzzy Vault de taille N (et s'appuyant sur un polynôme P) est, à l'index i, égal à P(i). Sinon, il est égal à un nombre choisi aléatoirement.

Au stade de la vérification, on récupère un vecteur binaire censé être proche du vecteur binaire enrôlé. On extrait alors du Fuzzy Vault généré lors de l'enrôlement tous les éléments d'index i tels que le vecteur binaire censé être proche du vecteur binaire enrôlé soit égal à 1. S'il n'y a pas de fraude ni d'erreur, les éléments extraits sont des valeurs du polynôme, que l'on peut interpoler pour retrouver le polynôme, polynôme que l'on peut comparer au polynôme effectivement utilisé (on peut par exemple comparer les hachés respectifs h(P) et h(P') des deux polynômes P et P'). Si le polynôme interpolé correspond au polynôme effectivement utilisé, l'authentification réussit, sinon elle échoue.

Cependant, il arrive que l'on dispose d'informations secondaires que l'on souhaiterait intégrer à l'encodage de type Fuzzy Vault. Une solution a été proposé par Umut Uludag et Anil Jain de l'université du Michigan dans leur article de 2006 intitulé « Securing Fingerprint Template: Fuzzy Vault with Helper Data », mais n'est pas nécessairement appropriée dans certains cas. En particulier, les informations secondaires incorporées selon cette technique ne sont pas intégrées de façon sécurisée dans le Fuzzy Vault.

Une autre solution du Fuzzy Vault intégrant une information secondaire a été proposée par Abhishek Nagar, Karthik Nandakumar et Anil Jain dans leur article « Securing Fingerprint Template : Fuzzy Vault with Minutiae Descriptors » de 2007.

L'invention vise donc à améliorer la situation.

Un aspect de l'invention concerne un procédé d'encodage d'informations représentées sous forme d'une fonction P, comprenant :
/a/ une obtention, par un circuit électronique d'encodage, des index respectifs de K éléments principaux correspondant chacun à un élément d'un ensemble indexé de N éléments possibles, dans cet ensemble indexé de N éléments possibles,
/b/ une obtention, par le circuit électronique d'encodage, de K éléments secondaires associés respectivement aux K éléments principaux, chaque élément secondaire pouvant prendre s valeurs,
/c/ une génération, par le circuit électronique d'encodage, d'un ensemble indexé de R éléments encodés comprenant K éléments principaux encodés, R étant un entier compris entre K+1 et N, à l'aide de la fonction P et d'une fonction injective TR ayant pour ensemble de départ l'ensemble des N index de l'ensemble indexé de N éléments possibles et ayant pour ensemble d'arrivée l'ensemble de départ de la fonction P privé de l'ensemble de départ de la fonction TR, une génération de l'élément encodé d'index i de l'ensemble indexé de R éléments encodés comprenant une génération de s+1 composantes, à savoir :
   /c1/ lorsque l'index i n'est égal à aucun des index des K éléments principaux dans l'ensemble indexé de N éléments possibles, une génération, par le circuit électronique d'encodage, de s+1 composantes simulées, et
   /c2/ lorsque l'index i est égal à l'index d'un des K éléments principaux dans l'ensemble indexé de N éléments possibles :
   /c2A/une génération, par le circuit électronique d'encodage, d'un élément principal encodé sous la forme d'une composante égale à P(i) à une première position déterminée des composantes générées,
   /c2B/une génération, par le circuit électronique d'encodage, d'une composante obtenue à partir de P(TR(i)) à une deuxième position déterminée des composantes générées, la deuxième position déterminée étant fonction de l'élément secondaire correspondant à l'élément principal dont l'index dans l'ensemble indexé de N éléments possibles est l'index i, et
   /c2C/une génération, par le circuit électronique d'encodage, de s-1 composantes simulées.

Ce procédé est avantageux notamment en ce qu'il permet d'intégrer des éléments secondaires dans l'encodage, et ce en fournissant deux fois plus de valuations du polynôme P que dans le Fuzzy Vault classique (voir davantage, puisque rien n'interdit d'intégrer plus d'un élément secondaire par élément principal), ce qui améliore les performances d'authentification. Le procédé fournit également plus de bruit (composantes simulées, telles que des nombres aléatoires), ce qui permet d'accroître la sécurité.

Les éléments secondaires permettent souvent une meilleure précision et permettent notamment, dans le cas d'une application à la biométrie, d'améliorer les performances d'authentification.

Par exemple, dans le cadre du premier exemple de l'art antérieur évoqué précédemment, Alice peut décider d'affiner sa recherche de cinéphiles en ajoutant par exemple à chacun de ses films préférés (représentés chacun par un élément principal) un élément secondaire précisant si le film concerné fait partie de ses dix films préférés. Bob peut faire de même avec sa propre liste. Un algorithme peut alors, pour chaque film en commun avec Alice, compter un certain nombre de points, et si ce film fait également partie des dix films d'Alice et de Bob, compter le double de points, le nombre total de points comptabilisés permettant ensuite de mesurer le degré d'affinité cinématographique d'Alice et Bob de manière plus précise.

Dans le cadre du deuxième exemple donné (application biométrique), le codage proposé par J. Bringer et V. Despiegel dans « Binary feature vector représentation from minutiae vicinities » (BTAS 2010) peut être amélioré selon la proposition de J. Bringer, V. Despiegel et M. Favre dans « Adding localization information in a fingerprint binary feature vector representation » (SPIE 2011) en ajoutant à chaque élément principal (voisinage de minutie) une élément secondaire précisant l'angle de la minutie centrale du voisinage de minutie considéré. Ceci améliore l'authentification.

Un autre aspect de l'invention concerne un procédé de décodage d'informations représentées sous forme d'une fonction, comprenant :
/d/ une obtention, par un circuit électronique de décodage, d'un ensemble indexé de R éléments encodés,
/e/ une obtention, par le circuit électronique de décodage, des index respectifs de K' éléments principaux allégués, correspondant chacun à un élément d'un ensemble indexé de N éléments possibles servant à obtenir l'ensemble indexé de R éléments encodés, dans cet ensemble indexé de N éléments possibles,
/f/ une obtention, par le circuit électronique de décodage, de K' éléments secondaires allégués associés respectivement aux K' éléments principaux allégués, chaque élément secondaire pouvant prendre s valeurs,
/g/ une extraction, par le circuit électronique de décodage, de chaque élément encodé dont l'index dans l'ensemble indexé de R éléments encodés est égal à l'index de l'un des K' éléments principaux allégués dans l'ensemble indexé de N éléments possibles,
/h/ pour chaque élément encodé ainsi extrait, l'obtention par le circuit électronique de décodage, à partir dudit élément encodé, d'un premier point dont l'abscisse est l'index i dudit élément encodé dans l'ensemble indexé de R éléments encodés et dont l'ordonnée est la valeur de la composante située à une première position déterminée dudit élément encodé, et d'un deuxième point dont l'abscisse est le résultat de l'application d'une fonction injective TR déterminée à l'index i dudit élément encodé dans l'ensemble indexé de R éléments encodés et dont l'ordonnée est la valeur de la composante située à une deuxième position déterminée dudit élément encodé, la deuxième position déterminée étant fonction de l'élément secondaire allégué correspondant à l'élément principal allégué dont l'index i dans l'ensemble indexé de N éléments possibles est le même que l'index i dudit élément encodé dans l'ensemble indexé de R éléments encodés,
/i/ l'obtention, par le circuit électronique de décodage, d'une fonction P' décodée, par décodage des points ainsi obtenus.

Ce procédé de décodage est avantageux notamment en ce qu'il permet d'exploiter les éléments encodés générés selon un procédé d'encodage selon un aspect de l'invention.

Un autre aspect de l'invention concerne un circuit électronique d'encodage (respectivement de décodage) agencé pour mettre en oeuvre les procédés d'encodage (respectivement de décodage) selon les aspects précités de l'invention.

Un autre aspect de l'invention concerne un programme d'ordinateur comprenant une suite d'instructions qui, lorsqu'elles sont exécutées par un processeur, conduisent le processeur à mettre en oeuvre un procédé selon l'un des aspects précités de l'invention.

Un autre aspect de l'invention concerne un support de stockage non transitoire lisible par ordinateur, ledit support stockant un programme d'ordinateur selon l'aspect précité de l'invention.

D'autres aspects, buts et avantages de l'invention apparaîtront à la lecture de la description de quelques uns de ses modes de réalisation.

L'invention sera également mieux comprise à l'aide des dessins, sur lesquels :
- la figure 1 illustre une station d'enrôlement ;
- la figure 2 illustre une station d'authentification ;
- la figure 3 illustre un élément principal correspondant à une empreinte digitale et un élément secondaire associé ;
- la figure 4 illustre un vecteur comprenant des éléments principaux et des éléments secondaires associés issus d'un enrôlement ;
- la figure 5 illustre un vecteur comprenant des éléments principaux et des éléments secondaires associés issus d'un procédé d'authentification ;
- la figure 6 illustre un vecteur comprenant un vecteur Fuzzy Vault adapté selon l'invention, issu d'un enrôlement ;
- la figure 7 illustre un vecteur comprenant un vecteur Fuzzy Vault adapté selon l'invention, issu d'un procédé d'authentification ;
- les figures 8 et 9 illustrent chacune un élément encodé selon des mises en oeuvre dans lesquelles plusieurs éléments secondaires sont encodés pour chaque élément principal.

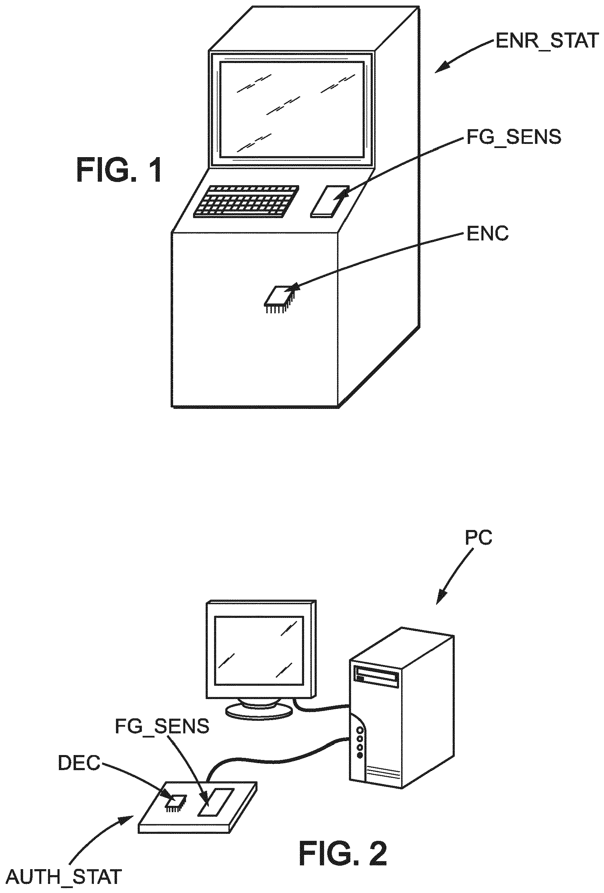

La figure 1 illustre une station d'enrôlement ENR_STAT. Il peut s'agir d'un ordinateur dédié se présentant sous forme d'un kiosque. Cette station d'enrôlement comprend un capteur d'empreintes digitales FG_SENS. Les empreintes captées sont traitées par un circuit électronique d'encodage ENC. La station d'enrôlement peut être utilisée par exemple dans une préfecture, afin de programmer les données biométriques d'un porteur de document officiel tel qu'un passeport électronique, une carte d'identité électronique ou un permis de conduire électronique. D'autres applications sont évidemment envisageables. La station d'enrôlement peut prendre d'autres formes. Elle est par exemple constituée d'un smart phone équipé d'un capteur d'empreinte digitale, ou encore d'un ordinateur personnel équipé d'un capteur d'empreinte digitale ou d'un ordinateur personnel connecté à un lecteur d'empreinte digitale externe (qui peut par exemple être connecté via un port USB).

La figure 2 illustre une station d'authentification AUTH_STAT. Il peut s'agir d'un ordinateur dédié se présentant sous forme de tablette reliée à un ordinateur PC (par exemple via un réseau informatique ou un port USB). Cette station d'authentification comprend un capteur d'empreintes digitales FG_SENS. Les empreintes captées sont traitées par un circuit électronique de décodage DEC. La station d'authentification peut être utilisée par exemple dans un aéroport, afin de vérifier les données biométriques d'un porteur de document officiel (tel qu'un passeport électronique ou une carte d'identité électronique) désirant passer la frontière. La station d'authentification peut également être utilisée par exemple lors de contrôles routiers (et faire partie de l'équipement d'une voiture de police ou de gendarmerie). D'autres applications sont évidemment envisageables. La station d'authentification peut prendre d'autres formes. Elle est par exemple constituée d'un smart phone équipé d'un capteur d'empreinte digitale, ou encore d'un ordinateur personnel équipé d'un capteur d'empreinte digitale ou d'un ordinateur personnel connecté à un lecteur d'empreinte digitale externe (qui peut par exemple être connecté via un port USB). Elle peut permettre à l'utilisateur qui s'est préalablement enrôlé d'accéder à toutes sortes de services d'ordre commercial ou administratif par un mécanisme d'authentification biométrique.

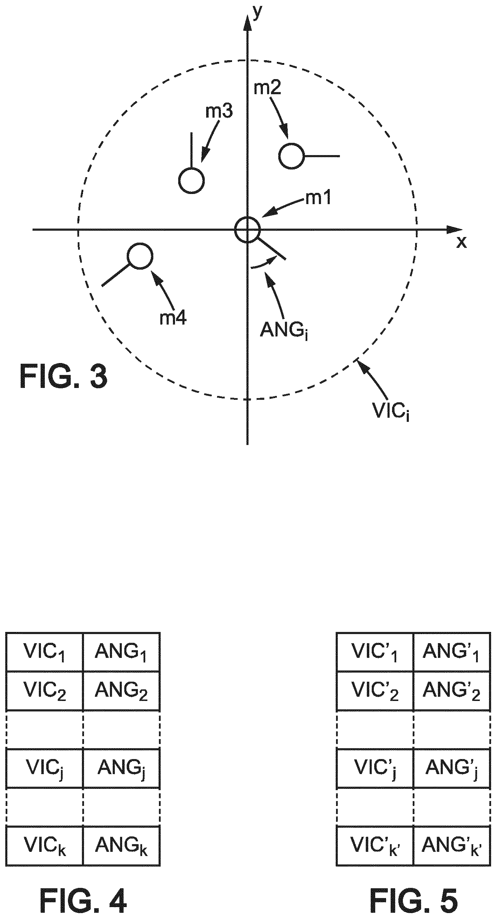

La figure 3 illustre un élément principal VICᵢ correspondant à une empreinte digitale et un élément secondaire ANGᵢ associé. Selon une mise en oeuvre possible, lors d'un enrôlement, un circuit d'encodage ENC extrait d'une empreinte digital une série d'éléments principaux VIC₁ ... VIC_{K} du type de celui illustré. Chaque élément principal et notamment l'élément principal numéro i (illustré) correspond à un voisinage de l'empreinte digitale. Ce voisinage comprend un certain nombre de minuties (en l'occurrence quatre minuties m1 à m4). Chacune de ces minuties (représentée par un cercle) est caractérisée notamment par son orientation, identifiée par un segment radial partant de ce cercle. La minutie centrale est notée m1. Lorsque le voisinage VICᵢ considéré est enregistré, l'orientation ANGᵢ de la minutie centrale m1 est considérée (selon un mode de réalisation possible) comme l'orientation du voisinage. Cette orientation est définie selon un mode de réalisation possible comme l'angle ANGᵢ entre le vecteur (0,-1) (c'est-à-dire un vecteur vertical, le long de l'axe des y, orienté vers le bas) d'un référentiel orthonormé direct centré sur la minutie m1 et le segment radial précité de cette minutie m1. Bien entendu, l'angle peut également être mesuré par rapport à un vecteur horizontal le long de l'axe des x (ou par rapport à tout autre vecteur de référence).

La figure 4 illustre un vecteur comprenant des éléments principaux VICᵢ et des éléments secondaires ANGᵢ associés issus d'un enrôlement. Il s'agit d'un vecteur à K éléments donc chaque élément est composé d'un voisinage VICᵢ et de l'orientation associée (ANGᵢ) de ce voisinage.

La figure 5 illustre un vecteur comprenant des éléments principaux VIC'ᵢ et des éléments secondaires associés ANG'ᵢ issus d'un procédé d'authentification. Il s'agit d'un vecteur à K' éléments donc chaque élément est composé d'un voisinage VIC'ᵢ et de l'orientation associée ANG'ᵢ de ce voisinage.

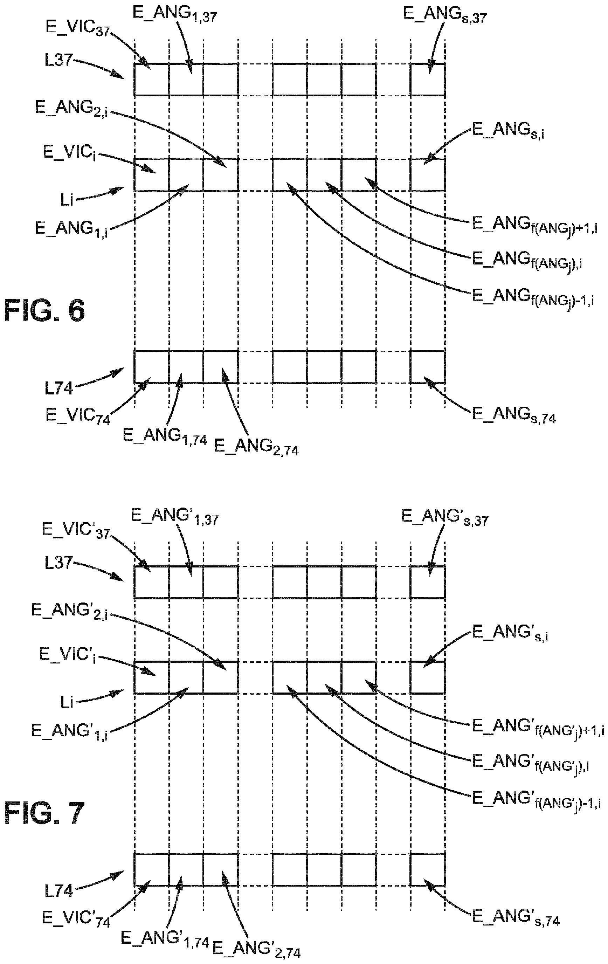

la figure 6 illustre un vecteur comprenant un vecteur Fuzzy Vault adapté selon l'invention, issu d'un enrôlement. Ce vecteur comprend N éléments encodés dont seulement trois sont représentés. Le premier d'entre eux est le 37^{ème} élément encodé (situé à la ligne L37) et se trouve correspondre (dans l'exemple illustré) au premier élément principal VIC₁ (il se peut que d'autres éléments principaux soient représentés sous forme encodée avant cette 37^{ème} ligne, c'est-à-dire entre la ligne L1 et la ligne L36). L'élément principal VIC₁ est encodé sous une forme E_VIC₃₇ et il est associé à s éléments secondaires encodés E_ANG_{1,37} ... E_ANG_{s,37}. Ensemble, le premier élément principal encodé E_VIC₃₇ et les éléments secondaires encodés E_ANG_{1,37} ... E_ANG_{s,37} constituent le 37^{ème} élément encodé du Fuzzy Vault. Le deuxième élément encodé représenté est le i^{ème} élément (situé à la i^{ème} ligne notée Li, i étant supérieur à 37 et inférieur à 74) et se trouve correspondre (dans l'exemple illustré) au j^{ème} élément principal VICⱼ (il se peut que d'autres éléments principaux soient représentés sous forme encodée entre la 38^{ème} et la (i-1)^{ème} ligne). L'élément principal VICⱼ est encodé sous une forme E_VICᵢ et il est associé à s éléments secondaires encodés E_ANG_{1,i}, E_ANG_{2,i}, ... E_ANG_{f(ANGj)-1,i} E_ANG_{f(ANGj),i}, E_ANG_{f(ANGj)+1,i} ... E_ANG_{s,i}. Ensemble, le i^{ème} élément principal encodé E_VICᵢ et les éléments secondaires encodés E_ANG_{1,i} ... E_ANG_{s,i} constituent le i^{ème} élément encodé du Fuzzy Vault. Enfin, le troisième élément encodé est le 74^{ème} élément (situé à la ligne L74) et se trouve correspondre (dans l'exemple illustré) au 2^{ème} élément principal VIC₂ (il se peut que d'autres éléments principaux soient représentés sous forme encodée entre la (i+1)^{ème} et la 73^{ème} ligne ou à la 75^{ème} ligne ou aux lignes suivantes). L'élément principal VIC₂ est encodé sous une forme E_VIC₇₄ et il est associé à s éléments secondaires encodés E_ANG_{1,74}, E_ANG_{2,74}, ... E_ANG_{s,74}. Ensemble, le 74^{ème} élément principal encodé E_VIC₇₄ et les éléments secondaires encodés E_ANG_{1,74} ... E_ANG_{s,74} constituent le 74^{ème} élément encodé du Fuzzy Vault.

La figure 7 illustre un vecteur comprenant un vecteur Fuzzy Vault adapté selon l'invention, issu d'un procédé d'authentification. Ce vecteur est similaire à celui obtenu dans le cadre du procédé d'enrôlement (figure 6) et les commentaires de la figure 6 se transposent à la figure 7.

Selon un premier mode de réalisation, un procédé d'encodage d'informations représentées sous forme d'une fonction P, comprend une obtention, par un circuit électronique d'encodage ENC, des index respectifs de K éléments principaux VIC₁, VIC₂, ... VIC_{K}, correspondant chacun à un élément d'un ensemble indexé de N éléments possibles, dans cet ensemble indexé de N éléments possibles. Selon une mise en oeuvre possible, ces éléments principaux sont issus de données biométriques.

Selon une mise en oeuvre possible, la fonction P est une fonction polynôme. Cependant, selon une mise en oeuvre alternative, la fonction P est, par exemple, une fonction d'évaluation sur des courbes algébriques (une courbe algébrique est une variété algébrique sur un corps, dont les composantes irréductibles sont de dimension 1). Dans la suite de la description de ce premier mode de réalisation, la fonction P sera une fonction polynôme (ou, de façon plus concise, un polynôme, en assimilant le polynôme et la fonction polynôme correspondante).

Ainsi, si l'ensemble indexé de N éléments possibles comprend dix éléments E₁ à E₁₀ d'index respectifs 1 à 10, s'il y a trois éléments principaux VIC₁, VIC₂ et VIC₃, et si VIC₁=E₄, VIC₂=E₇ et VIC₃=E₉, alors les index respectifs des K=3 éléments principaux VIC₁, VIC₂ et VIC₃ dans cet ensemble indexé de N=10 éléments possibles sont les index 4, 7 et 9 (et non 1, 2 et 3). Bien entendu, les N index peuvent être numérotés indifféremment de 1 à N, de 0 à N-1, ou selon toute autre plage de valeurs appropriée.

L'obtention visée peut être notamment une réception (le cas échéant depuis un autre circuit électronique) ou encore un calcul par le circuit électronique d'encodage lui-même. Dans le cas de la réception, il n'est pas nécessaire de recevoir les index de façon explicite (par exemple sous forme de liste d'index). Il est suffisant, par exemple (bien que l'obtention d'une liste explicite d'index soit possible), de recevoir un vecteur de dimension N, dont chaque élément comprend un bit à 1 pour indiquer que l'élément considéré du vecteur correspond à un élément principal, le bit étant à 0 pour indiquer que l'élément considéré du vecteur ne correspond à aucun élément principal. Dans l'exemple précédent, obtenir le vecteur binaire [0,0,0,1,0,0,1,0,1,0] est ainsi équivalent à recevoir la liste d'index {4, 7, 9}, puisque les index sont immédiatement dérivables du vecteur considéré.

Selon une mise en oeuvre possible, le circuit électronique d'encodage est un circuit électronique dédié tel qu'un FPGA, un ASIC, un PAL (ou tout autre composant électronique configurable), voire un composant électronique complètement sur mesure. Selon une autre mise en oeuvre possible, le circuit électronique d'encodage comprend à la fois un processeur et une mémoire associée (par exemple de type RAM, EEPROM, Flash, ROM, mémoire magnétique, mémoire optique, etc.), la mémoire associée comprenant un programme (stocké dans cette mémoire) apte à exécuter un procédé selon le premier mode de réalisation (ou, selon une variante, apte à exécuter une partie substantielle de ce procédé).

K et N sont des entiers strictement positifs. N est supérieur à K. Le polynôme P est un polynôme à une indéterminée sur un ensemble comprenant au moins (M+1)*N éléments, M étant un entier strictement positif (selon une mise en oeuvre possible, M est égal à 1). Cet ensemble peut être constitué d'entiers naturels ou relatifs. Selon une mise en oeuvre possible, cet ensemble est un corps fini. Selon une mise en oeuvre possible, les informations représentées par le polynôme P sont encodées dans les coefficients de ce polynôme P. Ce polynôme est secret (il ne doit pas être accessible à un tiers souhaitant effectuer le décodage correspondant si ce tiers n'y est pas autorisé).

Le procédé d'encodage selon le premier mode de réalisation comprend une obtention, par le circuit électronique d'encodage ENC, de K éléments secondaires ANG₁, ANG₂, ... ANG_{K} associés respectivement aux K éléments principaux VIC₁, VIC₂, ... VIC_{K} (c'est-à-dire que ANGⱼ est associé à VICⱼ pour tout j compris dans les K index possibles), chaque élément secondaire ANG₁, ANG₂, ... ANG_{K} pouvant prendre s valeurs. Selon une mise en oeuvre possible, chaque élément secondaire comprend plusieurs sous-éléments (par exemple un sous-élément d'orientation angulaire et un sous-élément de position). Ces s valeurs peuvent donc se subdiviser en plages de valeurs allouées chacune à un sous-élément respectif. Par exemple, chaque élément secondaire peut être codé sur b bits (s étant alors égal à 2^{b}), certaines plages de bits étant allouées à certains sous-éléments (par exemple on peut prévoir b=5, 3 bits étant réservés pour un sous-élément et 2 bits étant réservés pour un autre sous-élément).

Selon une mise en oeuvre possible du premier mode de réalisation (dénommée « mise en oeuvre comprenant plusieurs éléments secondaires par élément principal »), le procédé d'encodage comprend une obtention, par le circuit électronique d'encodage ENC, de plus de K éléments secondaires. Par exemple, selon cette mise en oeuvre, M est strictement supérieur à 1, et le procédé d'encodage comprend une obtention, par le circuit électronique d'encodage ENC, de M*K éléments secondaires ANG_{1,1}, ANG_{2,1}, ... ANG_{K,1}, (notation alternative des éléments ANG₁, ANG₂, ... ANG_{K} du paragraphe précédent), ANG_{1,2}, ANG_{2,2}, ... ANG_{K,2}, ... ANG_{1,M}, ANG_{2,M}, ... ANG_{K,M} associés aux K éléments principaux VIC₁, VIC₂, ... VIC_{K}. Plus précisément, les M éléments secondaires ANG_{j,k} (k variant de 1 à M) sont associés à VICⱼ pour tout j compris dans les K index possibles. Chaque élément secondaire ANG_{1,k}, ANG_{2,k}, ... ANG_{K,k} peut prendre sₖ valeurs (s₁ étant une notation alternative pour s selon le paragraphe précédent). Selon une mise en oeuvre possible, chaque élément secondaire comprend plusieurs sous-éléments (par exemple un sous-élément d'orientation angulaire et un sous-élément de position). Ces sₖ valeurs peuvent donc se subdiviser en plages de valeurs allouées chacune à un sous-élément respectif. Par exemple, chaque élément secondaire peut être codé sur bk bits (sₖ étant alors égal à 2^{bk}), certaines plages de bits étant allouées à certains sous-éléments (par exemple on peut prévoir pour tout k bk=5, 3 bits étant réservés pour un sous-élément et 2 bits étant réservés pour un autre sous-élément).

Le procédé d'encodage selon le premier mode de réalisation comprend une génération, par le circuit électronique d'encodage ENC, d'un ensemble indexé de R éléments encodés, à l'aide du polynôme P et d'une fonction injective TR (qui peut être publique et qui en tout cas est partagée avec le circuit électronique de décodage pour que le décodage soit effectué correctement).

R est un entier compris entre K+1 et N. Selon une mise en oeuvre possible R=N. Plus R est proche de N, plus le procédé est sécurisé, et plus R est proche de K+1, plus le procédé est rapide est économe en mémoire (mais moins sécurisé). Même lorsque R<N, l'ensemble indexé de R éléments encodés comprend toujours K éléments principaux encodés (les éléments « manquants » sont des éléments autres que ceux correspondant aux éléments principaux). Dans la suite de la description du premier mode de réalisation, on prend R=N, sauf mention contraire.

Cet ensemble indexé de N éléments encodés est par exemple un vecteur de dimension N (contenant N éléments encodés). La fonction injective TR a pour ensemble de départ l'ensemble des N index de l'ensemble indexé de N éléments possibles. Par exemple, la fonction injective TR s'applique sur les entiers compris entre 1 et N si c'est ainsi que sont attribués les index (ou encore sur les entiers entre 0 et N-1, si c'est la convention adoptée pour numéroter les index). La fonction injective TR a pour ensemble d'arrivée l'ensemble de départ du polynôme P privé de l'ensemble de départ de la fonction TR. Par exemple, si le polynôme prend ses valeurs dans 1...2*N, alors la fonction a pour ensemble d'arrivée N+1...2*N. Un exemple de fonction TR est la fonction qui à l'index i associe l'index i+N. Bien entendu, d'autres fonctions TR sont possibles (par exemple la fonction qui à l'index i associe l'index 2*N+1-i, si i varie entre 1 et N). La génération de l'élément encodé d'index i (pour tout i parmi les N index i possibles) de l'ensemble indexé de N éléments encodés comprend la génération de s+1 composantes E_VICᵢ, E_ANG_{1,i}, E_ANG_{2,i}, ... E_ANG_{s,i}. Selon une mise en oeuvre possible, ces s+1 composantes sont enregistrées dans l'ordre indiqué (d'abord E_VICᵢ, puis E_ANG_{1,i}, E_ANG_{2,i}, ... jusqu'à E_ANG_{s,i}) ou dans un ordre arbitraire, mais cet ordre est prédéfini de façon à ce que lors du décodage, il soit possible d'accéder de façon sélective à ces composantes (en connaissant leur ordre lors de l'encodage) à partir des N*(s+1) composantes générées. Bien entendu, le fait que le procédé génère s+1 composantes pour l'élément encodé d'index i n'exclut pas qu'il génère plus de s+1 composantes, ainsi que cela est expliqué au paragraphe suivant (cependant, selon une mise en oeuvre possible, M=1 et le procédé génère exactement s+1 composantes).

Dans le cas de la mise en oeuvre comprenant plusieurs éléments secondaires par élément principal, le procédé d'encodage selon le premier mode de réalisation comprend, selon une mise en oeuvre possible, une génération, par le circuit électronique d'encodage ENC, d'un ensemble indexé de N éléments encodés, à l'aide du polynôme P et de M fonctions injectives TR₁, TR₂, ..., TR_{M} (qui peuvent être publiques et qui en tout cas sont partagées avec le circuit électronique de décodage pour que le décodage soit effectué correctement), TR₁ étant une notation alternative de la fonction TR envisagée au paragraphe précédent. Cet ensemble indexé de N éléments encodés est par exemple (comme indiqué précédemment) un vecteur de dimension N (contenant N éléments encodés). Les fonctions injectives TRₖ ont pour ensemble de départ l'ensemble des N index de l'ensemble indexé de N éléments possibles. Par exemple, pour tout k, une fonction injective TRₖ s'applique sur les entiers compris entre 1 et N si c'est ainsi que son attribués les index (ou encore sur les entiers entre 0 et N-1, si c'est la convention adoptée pour numéroter les index). Les fonctions injectives TRₖ ont pour ensemble d'arrivée l'ensemble de départ du polynôme P privé de l'ensemble de départ de la fonction TRₖ et privé des ensembles d'arrivée des fonctions TRⱼ pour j<k. On peut ainsi définir la fonction TR₁, en fonction de l'ensemble de départ du polynôme P (plus généralement de la fonction P), puis TRₖ (pour tout k>1, en considérant les indices k de façon croissante de 2 à M) en fonction de l'ensemble d'arrivée des fonctions TRⱼ (j<k) et en fonction de l'ensemble de départ du polynôme P. Par exemple, selon une mise en oeuvre possible, le polynôme P prend ses valeurs dans 1...(M+1)*N, et la fonction TR₁ a pour ensemble d'arrivée N+1...2*N, la fonction TR₂ a pour ensemble d'arrivée 2*N+1...3*N, ..., la fonction TR_{M} a pour ensemble d'arrivée M*N+1...(M+1)*N. Un exemple de fonction TRₖ est donc la fonction qui à l'index i associe l'index i+k*N. Bien entendu, d'autres fonctions TRₖ sont possibles (par exemple la fonction TRₖ qui à l'index i associe l'index (k+1)*N+1-i, si i varie entre 1 et N). La génération de l'élément encodé d'index i (pour tout i parmi les N index i possibles) de l'ensemble indexé de N éléments encodés comprend alors (et selon une mise en oeuvre possible, consiste en) la génération de s₁+s₂+...+s_{M}+1 composantes E_VICᵢ, E_ANG_{1,1,i}, E_ANG_{2,1,i}, ... E_ANG_{s1,1,i}, E_ANG_{1,2,i}, E_ANG_{2,2,i}, ... E_ANG_{s2,2,i}, ... E_ANG_{1,M,i}, E_ANG_{2,M,i}, ... E_ANG_{sM,M,i},. Ces s₁+s₂+...+s_{M}+1 composantes peuvent être enregistrées dans l'ordre indiqué (d'abord E_VICᵢ, puis E_ANG_{1,1,i}, E_ANG_{2,1,i}, ... jusqu'à E_ANG_{sM,M,i}) ou dans un ordre arbitraire, mais cet ordre est prédéfini de façon à ce que lors du décodage, il soit possible d'accéder de façon sélective à ces composantes (en connaissant leur ordre lors de l'encodage) à partir des N*(s₁+s₂+...+s_{M}+1) composantes générées.

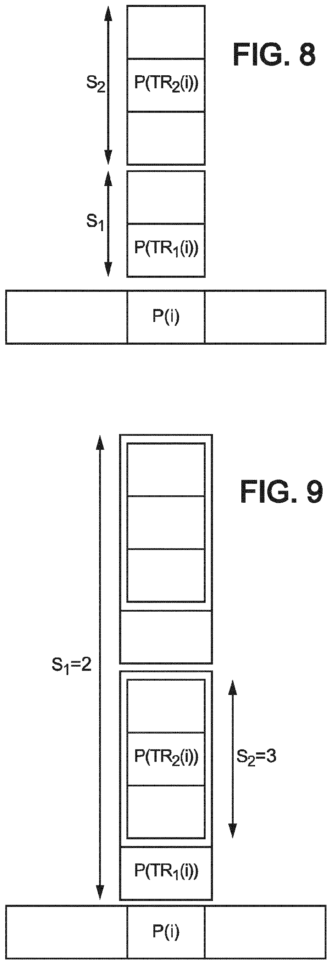

Selon une autre mise en oeuvre possible, dans le cas de la mise en oeuvre comprenant plusieurs éléments secondaires par élément principal, la génération de l'élément encodé d'index i (pour tout i parmi les N index i possibles) de l'ensemble indexé de N éléments encodés comprend la génération de (...((s_{M}+1)*s_{M-1}+1)...)*s₁+1 composantes E_VICᵢ, E_ANG_{i,j,k}. Chaque niveau étant un encodage du niveau inférieur. Ces deux mises en oeuvre possibles sont illustrées sur les figures 8 et 9.

Ci-dessous, le cas R<N n'est pas explicitement décrit mais il est analogue, par exemple en prenant l'hypothèse (qualifiée d'« hypothèse d'identité d'index ») que les index utilisés pour identifier les éléments encodés de l'ensemble indexé de R éléments encodés sont tels que lorsqu'un élément encodé contient un élément principal encodé, l'index de cet élément encodé dans l'ensemble indexé de R éléments encodés est le même que l'index de l'élément principal correspondant dans l'ensemble indexé de N éléments possibles. Ceci peut impliquer des sauts d'index dans l'ensemble indexé de R éléments encodés, c'est-à-dire que l'ensemble des index des éléments encodés de l'ensemble indexé de R éléments encodés ne comprend pas nécessairement tous les index possibles compris entre le plus petit index de cet ensemble et le plus grand index de cet ensemble. Cette hypothèse est formulée afin de simplifier les comparaisons d'index (lorsque l'on parle d'index égaux, on parle d'index ayant la même valeur numérique). Mais bien entendu, dans un cas plus général, on définit une fonction (qui peut être une injection selon une mise en oeuvre possible) de l'ensemble des R index des R éléments encodés de l'ensemble indexé de R éléments encodés vers l'ensemble des N index des N éléments de l'ensemble indexé de N éléments possibles, et l'on considère qu'un index de l'ensemble des N index des N éléments de l'ensemble indexé de N éléments possibles est égal à un index de l'ensemble des R index des R éléments encodés de l'ensemble indexé de R éléments encodés si ledit index de l'ensemble des N index des N éléments de l'ensemble indexé de N éléments possibles est égal au résultat de ladite fonction appliquée audit index de l'ensemble des R index des R éléments encodés de l'ensemble indexé de R éléments encodés. De façon analogue, même dans le cas R=N, on peut envisager le recours à une telle fonction.

Lorsque l'index i n'est égal à aucun des index des K éléments principaux VIC₁, VIC₂, ... VIC_{K} dans l'ensemble indexé de N éléments possibles (ce qui en l'espèce est le cas pour N-K index et dans le cas général est le cas pour R-K index, même si R<N), le circuit électronique d'encodage ENC génère s+1 composantes simulées. Selon une autre mise en oeuvre possible, ces composantes simulées sont des valuations d'un autre polynôme Q. Cet autre polynôme Q permet éventuellement de donner l'illusion à un attaquant qu'il a trouvé le bon polynôme P alors qu'en fait il s'agit d'un leurre (polynôme Q). Selon une autre mise en oeuvre possible, ces composantes simulées sont générées sous forme de nombres aléatoires. Le circuit d'encodage génère exactement s+1 composantes aléatoires, alors que selon une autre mise en oeuvre possible, il génère au moins s+1 composantes aléatoires. Par exemple, selon une mise en oeuvre possible comprenant plusieurs éléments secondaires par élément principal, le circuit électronique d'encodage ENC génère exactement s₁+s₂+...+s_{M}+1 composantes aléatoires. Dans toute la description, le terme « aléatoire » est utilisé en lieu et place du terme plus rigoureux « pseudo-aléatoire ». En effet, un aléa parfait ne peut généralement pas être obtenu, et les techniques utilisées visent simplement à se rapprocher d'un aléa parfait (d'une manière connue dans l'état de l'art) par exemple à l'aide d'une source d'entropie physique (telle qu'un générateur matériel s'appuyant sur un bruit analogique capté par un convertisseur analogique numérique) ou d'une source d'entropie logicielle, et d'un algorithme pseudo aléatoire exploitant cette source d'entropie. Cette génération de composantes aléatoires correspond à ce que l'on a précédemment qualifié de bruit. Ainsi, lorsqu'un des N éléments possible n'est pas représenté parmi les K éléments principaux, cet élément donne lieu à un encodage purement aléatoire. Selon une mise en oeuvre possible, le circuit électronique d'encodage vérifie que la composante située à la première position déterminée (décrite ci-après) n'est pas égale à P(i), et si une égalité est constatée, génère un nouveau nombre aléatoire pour cette composante jusqu'à ce que ce nombre aléatoire soit différent de P(i). Selon une mise en oeuvre possible, le circuit électronique d'encodage vérifie que la composante située à la deuxième position déterminée (décrite ci-après) n'est pas égale à P(TR(i)), et si une égalité est constatée, génère un nouveau nombre aléatoire pour cette composante jusqu'à ce que ce nombre aléatoire soit différent de P(TR(i)).

A l'inverse, si contrairement au paragraphe précédent l'index i est égal à l'index d'un élément VICⱼ (noter l'indice j et non i puisque l'on a généralement i≠j) parmi les K éléments principaux VIC₁, VIC₂, ... VIC_{K} dans l'ensemble indexé de N éléments possibles, les trois dispositions suivantes sont prises.

D'une part, le circuit électronique d'encodage ENC génère une composante E_VICᵢ égale à P(i) (la valeur du polynôme P pour l'index i considéré) à une première position déterminée des composantes générées. Ceci correspond à un élément principal encodé. A chaque élément principal correspond (même dans le cas R<N) un élément principal encodé respectif (il y a autant d'éléments principaux que d'éléments principaux encodés). La première position déterminée est par exemple l'une des s+1 positions lorsque exactement s+1 composantes sont générées, ou, selon une mise en oeuvre comprenant plusieurs éléments secondaires par élément principal, l'une des s₁+s₂+...+s_{M}+1 positions ou selon une autre variante (...((s_{M}+1)*s_{M-1}+1)...)*s₁+1 positions (correspondant aux composantes générées lorsque exactement s₁+s₂+...+s_{M}+1 ou selon l'autre variante (...((s_{M}+1)*s_{M-1}+1)...)*s₁+1 composantes sont générées). Par exemple, cette première position est la position 1 sur les s+1 positions (ou encore position 1 sur les s₁+s₂+...+s_{M}+1 positions dans le deuxième cas envisagé). La position indiquée par cette première position importe peu mais est définie et partagée avec le circuit électronique de décodage (un partage possible consiste par exemple à considérer dans les deux circuits qu'il convient toujours d'utiliser la position 1 comme première position).

De plus, le circuit électronique d'encodage ENC génère une composante E_ANG_{f(ANGj),i} obtenue à partir de P(TR(i)) (par exemple une composante égale à P(TR(i))) à une deuxième position déterminée des composantes générées (par exemple une deuxième position déterminée des s+1 composantes générées lorsque exactement s+1 composantes sont générées), la deuxième position déterminée étant fonction de l'élément secondaire ANGⱼ correspondant à l'élément principal VICⱼ dont l'index dans l'ensemble indexé de N éléments possibles est l'index i. Comme ci-dessus, la position indiquée par la deuxième position importe peu tant qu'elle est différente de la première position et qu'elle est différente pour chacune des valeurs possibles de l'élément secondaire ANGⱼ. Selon une mise en oeuvre possible, le procédé utilise une double indexation pour accéder à la deuxième position, mais une indexation simple est également possible (il s'agit d'un choix d'implémentation indifférent du point de vue de l'invention). Selon une mise en oeuvre possible, l'élément secondaire ANGⱼ est un angle arrondi au multiple de 45° le plus proche (les angles entre -22,5° et 22,49° étant par exemple considérés comme 0°, les angles entre 22,5° et 67,49° étant par exemple considérés comme 45°, et ainsi de suite). Chaque secteur angulaire de 45° peut être numéroté (par exemple de 0 à 7, ou encore de 1 à 8) et codé sur trois bits. Selon une mise en oeuvre possible, une fonction f associe au secteur angulaire (représentant l'angle) son numéro de secteur angulaire sur trois bits, et ce numéro sert comme pointeur vers la deuxième position. De façon plus générale, à tout élément secondaire, une fonction f peut associer la représentation binaire de cet élément secondaire, qui (acceptant s valeurs) est par exemple un nombre entre 0 et s-1. Selon une mise en oeuvre possible, l'élément secondaire a pour valeur sa représentation binaire. Par exemple, l'élément secondaire est une valeur angulaire codée sur trois bits variant de 0 à 7 (valeur angulaire exprimée dans une unité différente des unités conventionnelles telle que les degrés ou les radians). La fonction f peut alors être l'identité (ce qui revient à dire qu'aucune fonction f n'est appliquée), ce qui est possible par exemple en cas de double indexation, ou encore en cas de simple indexation si les s positions qui apparaissent en premier sont réservées pour les s deuxièmes positions possibles. La fonction f peut également être, par exemple, une translation d'une composante. Selon une mise en oeuvre possible comprenant plusieurs éléments secondaires par élément principal, dans laquelle le circuit électronique d'encodage ENC génère exactement s₁+s₂+...+s_{M}+1 composantes (avec M>1), le circuit électronique d'encodage ENC génère M composantes E_ANG_{f(ANGj,k),k,i} égales à P(TRₖ(i)) à M deuxièmes positions déterminée des s₁+s₂+...+s_{M}+1 composantes générées. L'une de ces deuxièmes positions déterminées correspondant à la deuxième position déterminée selon la mise en oeuvre précédente. Ces deuxièmes positions déterminées sont fonctions des éléments secondaires ANG_{j,k} correspondant à l'élément principal VICⱼ dont l'index dans l'ensemble indexé de N éléments possibles est l'index i. Comme ci-dessus, les positions indiquées par les M deuxièmes positions importent peu tant qu'elles sont différentes de la première position et qu'elles sont différentes pour chacune des valeurs possibles des éléments secondaires ANG_{j,k}.

Enfin, le circuit électronique d'encodage ENC génère (au moins) s-1 composantes (selon une mise en oeuvre possible, il génère exactement s-1 composantes restantes sur exactement s+1 composantes générées, à savoir E_ANG_{1,i}, E_ANG_{2,i}, ... E_ANG_{f(ANGj)-1,i}, E_ANG_{f(ANGj)+1,i}, ... E_ANG_{s,i}) de façon simulée (par exemple de façon aléatoire, ou via des valuations de polynômes leurres, etc.). Les notations de la phrase précédentes pourraient laisser penser que f(ANGⱼ)>3 et f(ANGⱼ)<s-1, mais bien sûr il n'existe pas de telle contrainte sur f(ANGⱼ) (ce n'est qu'une commodité d'écriture, qui doit être tenue pour équivalente à {E_ANG_{k,i}}, k=1...s et k≠f(ANGⱼ)). Selon une mise en oeuvre possible comprenant plusieurs éléments secondaires par élément principal, dans laquelle le circuit électronique d'encodage ENC génère exactement s₁+s₂+...+s_{M}+1 composantes (avec M>1), le circuit électronique d'encodage ENC génère exactement s₁+s₂+...+s_{M}-M composantes de façon simulée. Il s'agit des s₁+s₂+...+s_{M}-M composantes restantes sur les s₁+s₂+...+s_{M}+1 composantes, à savoir E_ANG_{1,1,i}, E_ANG_{2,1,i}, ... E_ANG_{f(ANGj,1)-1,1,i}, E_ANG_{f(ANGj,1)+1,1,i}, ... E_ANG_{s1,1,i}, ..., E_ANG_{1,M,i}, E_ANG_{2,M,i}, ... E_ANG_{f(ANGj,M)-1,M,i}, E_ANG_{f(ANGj,M)+1,M,i}, ... E_ANG_{sM,M,i}.

Selon un deuxième mode de réalisation, un procédé d'enrôlement biométrique comprend une obtention, par un circuit électronique d'enrôlement, d'une empreinte biométrique de référence d'un utilisateur. Le circuit électronique d'enrôlement peut ainsi comprendre un capteur d'empreinte biométrique (par exemple un capteur d'empreinte digitale, d'iris, de visage etc.) ou encore un récepteur apte à recevoir une telle empreinte biométrique depuis un autre circuit (en charge de l'obtenir à partir d'un organe), le cas échéant via un réseau. Selon une mise en oeuvre possible, plusieurs empreintes biométriques de l'utilisateur sont captées afin d'obtenir une empreinte de référence plus robuste. Cette empreinte de référence ainsi obtenue (lors d'une phase initiale d'enrôlement) sert ensuite à authentifier un candidat à l'authentification prétendant être ce même utilisateur par comparaison (indirecte) avec une empreinte de ce candidat.

Selon une mise en oeuvre possible, le circuit électronique d'enrôlement est un circuit électronique dédié tel qu'un FPGA, un ASIC, un PAL (ou tout autre composant électronique configurable), voire un composant électronique complètement sur mesure. Selon une autre mise en oeuvre possible, le circuit électronique d'enrôlement comprend à la fois un processeur et une mémoire associée (par exemple de type RAM, EEPROM, Flash, ROM, mémoire magnétique, mémoire optique, etc.), la mémoire associée comprenant un programme (stocké dans cette mémoire) apte à exécuter un procédé selon le deuxième mode de réalisation (ou, selon une variante, apte à exécuter une partie substantielle de ce procédé).

Selon le deuxième mode de réalisation, le procédé d'enrôlement biométrique comprend une extraction, par le circuit électronique d'enrôlement, à partir de l'empreinte biométrique de référence, de K éléments principaux VIC₁, VIC₂, ... VIC_{K}, correspondant chacun à une caractéristique de l'empreinte biométrique de référence.

Selon une mise en oeuvre possible, les éléments principaux sont des voisinages (en anglais : « vicinity ») de minuties d'empreinte digitale. Les voisinages sont obtenus par exemple selon le mode opératoire décrit dans l'article « Adding Localization Information in a Fingerprint Binary Feature Vector Representation » du déposant de la présente demande (les auteurs en sont Julien Bringer, Vincent Despiegel, et Mélanie Favre).

Ainsi, les voisinages peuvent être déterminés selon le procédé décrit à la section 2.1 (page 2-3). En résumé, à partir d'une empreinte digitale, il convient d'extraire les minuties. Il convient alors, à partir de chaque minutie, de déterminer l'ensemble des minuties situées dans un cercle centré sur cette minutie et de rayon déterminé.

Selon le deuxième mode de réalisation, le procédé d'enrôlement biométrique comprend une extraction, par le circuit électronique d'enrôlement, à partir de l'empreinte biométrique de référence, de K éléments secondaires ANG₁, ANG₂, ... ANG_{K} correspondant chacun à au moins un paramètre de chacun des K éléments principaux VIC₁, VIC₂, ... VIC_{K} respectifs.

Selon une mise en oeuvre possible, les éléments secondaires sont, pour chaque voisinage de minuties d'empreinte digitale, l'angle de la minutie centrale de ce voisinage de minuties, obtenu par exemple selon le mode opératoire décrit dans l'article « Adding Localization Information in a Fingerprint Binary Feature Vector Representation » précité. Cet angle peut être déterminé par exemple de la manière indiquée aux sections 4.2, 4.2.1 ou 4.2.2 (pages 6-7). Il peut notamment être codé sur trois bits à l'aide d'un code dit code de Gray. Au lieu de l'angle, il est également possible d'utiliser comme élément secondaire un autre paramètre, tel que la position du voisinage considéré. La surface de la phalange distale d'un doigt peut ainsi être divisée en quatre secteurs, et la position peut correspondre au secteur dans lequel se trouve le voisinage (ce secteur peut être codé sur deux bits). Il est également possible d'encoder plusieurs paramètres (par exemple l'angle sur trois bits et la position sur deux bits) au sein d'un même élément secondaire (qui dans l'exemple donné occupe donc cinq bits). Selon une mise en oeuvre possible, le procédé encode angle et position au sein de deux groupes d'éléments secondaires. Selon une autre mise en oeuvre possible, la position est encodée dans les s+1 composantes.

Selon le deuxième mode de réalisation, le procédé d'enrôlement biométrique comprend une obtention, par le circuit électronique d'enrôlement, d'une indexation des K éléments principaux VIC₁, VIC₂, ... VIC_{K} par rapport à un ensemble indexé de N éléments possibles, cet ensemble étant une base de caractéristiques d'empreintes biométriques. Par exemple, l'ensemble indexé de N éléments possibles peut être une base d'éléments principaux de référence (obtenus par exemple par extraction d'une base de données biométrique comprenant de nombreux utilisateurs). Chaque élément principal peut alors être comparé aux éléments de la base. L'index de l'élément de cette base d'éléments principaux qui est le plus proche de l'élément principal considéré est défini comme l'index de cet élément principal. La proximité de l'élément principal considéré avec les éléments de la base n'est pas nécessairement (et n'est généralement pas) une simple mesure d'égalité (il est rare que l'élément principal considéré soit strictement égal l'un des éléments de la base), mais se détermine à l'aide d'une fonction mesurant la similarité entre deux éléments (telle que par exemple celle décrite dans l'article « Binary Feature Vector Fingerprint Représentation from Minutia Vicinities ».

Selon le deuxième mode de réalisation, le procédé d'enrôlement biométrique comprend une obtention, par le circuit électronique d'enrôlement, d'un ensemble indexé de R éléments encodés grâce à l'encodage, selon un procédé selon le premier mode de réalisation, d'un polynôme P (ou plus généralement d'une fonction P). Cet ensemble indexé de R éléments encodés est par exemple un vecteur de dimension R comprenant R éléments encodés, qui peuvent être enregistrés pour référence (par exemple aux fins d'une authentification ultérieure). Selon une mise en oeuvre possible du deuxième mode de réalisation, R=N.

Selon un troisième mode de réalisation, un procédé de décodage d'informations représentées sous forme d'un polynôme comprend une obtention, par un circuit électronique de décodage DEC, d'un ensemble indexé de R éléments encodés. Ces R éléments encodés sont censés avoir été encodés sur la base d'un polynôme P et d'une fonction injective TR déterminée. Le décodage ne se déroule correctement que dans cette hypothèse. Dans le cas contraire, selon une mise en oeuvre possible, le procédé de décodage signale une erreur. Selon une mise en oeuvre possible, le décodage retourne un résultat erroné.

Selon une mise en oeuvre possible, le circuit électronique de décodage est un circuit électronique dédié tel qu'un FPGA, un ASIC, un PAL (ou tout autre composant électronique configurable), voire un composant électronique complètement sur mesure. Selon une autre mise en oeuvre possible, le circuit électronique de décodage comprend à la fois un processeur et une mémoire associée (par exemple de type RAM, EEPROM, Flash, ROM, mémoire magnétique, mémoire optique, etc.), la mémoire associée comprenant un programme (stocké dans cette mémoire) apte à exécuter un procédé selon le troisième mode de réalisation (ou, selon une variante, apte à exécuter une partie substantielle de ce procédé).

Selon le troisième mode de réalisation, le procédé de décodage d'informations comprend une obtention, par le circuit électronique de décodage DEC, des index respectifs de K' éléments principaux allégués VIC'₁, VIC'₂, ... VIC'_{K'}, correspondant chacun à un élément d'un ensemble indexé de N éléments possibles servant à obtenir l'ensemble indexé de R éléments encodés, dans cet ensemble indexé de N éléments possibles. Ces éléments principaux allégués sont censés correspondre (sans être nécessairement strictement identiques) aux éléments principaux utilisés lors de l'encodage des éléments que le procédé de décodage d'information vise à décoder.

Selon une mise en oeuvre possible, R=N. Selon une mise en oeuvre possible, K' et K sont égaux. Selon une mise en oeuvre possible, le nombre d'éléments principaux est constant, et en général on peut s'attendre à un nombre d'éléments principaux allégués constant lui aussi (puisqu'un nombre différent pourrait être détecté et considéré comme résultant une erreur ou une fraude). Selon une mise en oeuvre possible, le procédé signale une erreur si K et/ou K' n'ont pas une valeur conforme à ce qui est prévu par le procédé.

Selon le troisième mode de réalisation, le procédé de décodage d'informations comprend une obtention, par le circuit électronique de décodage DEC, de (au moins) K' (et selon une mise en oeuvre possible, exactement K') éléments secondaires allégués ANG'₁, ANG'₂, ... ANG'_{K'} associés respectivement aux K' éléments principaux allégués VIC'₁, VIC'₂, ... VIC'_{K'}, chaque élément secondaire ANG'₁, ANG'₂, ... ANG'_{K'} pouvant prendre s valeurs. Ces éléments secondaires allégués sont censés correspondre (sans être nécessairement strictement identiques) aux éléments secondaires utilisés lors de l'encodage des éléments que le procédé de décodage d'information vise désormais à décoder. Selon une mise en oeuvre possible, le procédé de décodage d'informations comprend une obtention, par le circuit électronique de décodage DEC, de M*K' (avec M>1) éléments secondaires allégués ANG'_{1,1}, ANG'_{2,1}, ... ANG'_{K',1}, ... , ANG'_{1,M}, ANG'_{2,M}, ... ANG'_{K',M} associés respectivement aux K' éléments principaux allégués VIC'₁, VIC'₂, ... VIC'_{K'}, chaque élément secondaire ANG'_{1,k}, ANG'_{2,k}, ... ANG'_{K',k} pouvant prendre sₖ valeurs. Ces éléments secondaires allégués sont censés correspondre (sans être nécessairement strictement identiques) aux éléments secondaires utilisés lors de l'encodage des éléments que le procédé de décodage d'information vise désormais à décoder. Les notations ANG'₁, ANG'₂, ... ANG'_{K'} désignent les mêmes éléments secondaires que les notations ANG'_{1,1}, ANG'_{2,1}, ... ANG'_{K',1} (et s₁=s).

Selon le troisième mode de réalisation, le procédé de décodage d'informations comprend une extraction, par le circuit électronique de décodage DEC, de chaque élément encodé dont l'index dans l'ensemble indexé de R éléments encodés est égal à l'index de l'un des K' éléments principaux allégués VIC'₁, VIC'₂, ... VIC'_{K'} dans l'ensemble indexé de N éléments possibles.

Selon le troisième mode de réalisation, le procédé de décodage d'informations comprend, pour chaque élément encodé ainsi extrait, une obtention par le circuit électronique de décodage DEC, à partir dudit élément encodé, d'un premier point dont l'abscisse est l'index i dudit élément encodé dans l'ensemble indexé de N éléments encodés. L'ordonnée de ce premier point est la valeur de la composante E_VIC'ᵢ située à une première position déterminée dudit élément encodé. Cette première position est la même position (relative) que celle qui est utilisée lors du procédé d'encodage correspondant. Le procédé de décodage d'information comprend également, pour chaque élément encodé ainsi extrait, une obtention par le circuit électronique de décodage DEC, à partir dudit élément encodé, d'un deuxième point dont l'abscisse est le résultat de l'application de la fonction injective TR à l'index dudit élément encodé dans l'ensemble indexé de N éléments encodés. L'ordonnée du deuxième point est la valeur de la composante E_ANG'_{f(ANG'j),i} située à une deuxième position déterminée dudit élément encodé. La deuxième position déterminée est fonction de l'élément secondaire allégué ANG'ⱼ correspondant à l'élément principal allégué VIC'ⱼ (noter l'indice j et non i puisque l'on a généralement i≠j) dont l'index i dans l'ensemble indexé de N éléments possibles est le même que l'index dudit élément encodé dans l'ensemble indexé de R éléments encodés. Cette deuxième position est calculée de la même façon que la deuxième position qui est utilisée lors du procédé d'encodage correspondant. Selon une mise en oeuvre possible, le procédé de décodage d'information comprend, pour chaque élément encodé ainsi extrait, une obtention par le circuit électronique de décodage DEC, à partir dudit élément encodé, de M deuxièmes points (le premier deuxième point étant le deuxième point précité) dont les abscisses sont les résultats respectifs de l'application des fonctions injectives TR₁, TR₂, ..., TR_{M} à l'index dudit élément encodé dans l'ensemble indexé de R éléments encodés. Les ordonnées des M deuxièmes points sont les valeurs des composantes E_ANG'_{f(ANG'j,k),k,i} situées aux M deuxièmes positions déterminées dudit élément encodé. Ces deuxièmes positions déterminées sont fonction des éléments secondaires allégués ANG'_{j,k} correspondant à l'élément principal allégué VIC'ⱼ (noter l'indice j et non i puisque l'on a généralement i≠j) dont l'index i dans l'ensemble indexé de N éléments possibles est le même que l'index dudit élément encodé dans l'ensemble indexé de R éléments encodés (c'est-à-dire que ces deux mêmes index sont des index identiques ou correspondants, ainsi que cela a été envisagé de manière similaire dans le cadre du premier mode de réalisation - « hypothèse d'identité d'index » et sa généralisation via une fonction, telle qu'une injection). Ces M deuxièmes positions sont calculées de la même façon que les M deuxièmes positions qui sont utilisées lors du procédé d'encodage correspondant (elles sont partagées entre le circuit électronique d'encodage et le circuit électronique de décodage).

Selon le troisième mode de réalisation, le procédé de décodage d'informations comprend une obtention, par le circuit électronique de décodage DEC, d'un polynôme P' décodé (ou plus généralement d'une fonction P' décodée), par décodage (selon un algorithme de décodage donné) des points ainsi obtenus. Le polynôme P' (ou fonction P) ainsi décodé(e) est égal au polynôme P (ou fonction P) si les R éléments encodés ont bien été encodés à partir du polynôme P (ou fonction P) et de la fonction injective TR, si les K' éléments principaux allégués étaient bien K' éléments principaux correspondant aux K éléments principaux utilisés lors de l'encodage, et si les K' éléments secondaires allégués étaient bien K' éléments secondaires correspondant aux K éléments secondaires utilisés lors de l'encodage. Selon une mise en oeuvre possible dans lequel M>1, le polynôme P' (ou fonction P') décodé(e) est égal au polynôme P (ou fonction P) si les R éléments encodés ont bien été encodés à partir du polynôme P (ou fonction P) et des fonctions injectives TR₁, TR₂, ... , TR_{M}, si les K' éléments principaux allégués étaient bien K' éléments principaux correspondant aux K éléments principaux utilisés lors de l'encodage, et si les M*K' éléments secondaires allégués étaient bien M*K' éléments secondaires correspondant aux M*K éléments secondaires utilisés lors de l'encodage.

Selon une mise en oeuvre possible, le décodage est une interpolation (l'algorithme de décodage est un algorithme d'interpolation). Selon une autre mise en oeuvre, le décodage s'appuie sur un code de Reed-Solomon. Selon une autre mise en oeuvre, le décodage s'appuie sur un code algébrique.

Selon un quatrième mode de réalisation, un procédé d'authentification biométrique comprend une obtention, par un circuit électronique d'authentification, d'un polynôme P et d'un ensemble indexé de R éléments encodés lors d'un procédé d'enrôlement à l'aide du polynôme P.

Le procédé d'authentification biométrique comprend une obtention, par le circuit électronique d'authentification, d'une empreinte biométrique alléguée d'un candidat à l'authentification. Le procédé d'authentification biométrique vise à déterminer si l'ensemble indexé de R éléments encodés (qui peut être par exemple un vecteur de dimension N comprenant R éléments encodés) a été encodé en présentant des informations dérivées d'une empreinte biométrique très proche de l'empreinte biométrique alléguée (c'est-à-dire considérée comme issue de la même personne).

Selon une mise en oeuvre possible, le circuit électronique d'authentification est un circuit électronique dédié tel qu'un FPGA, un ASIC, un PAL (ou tout autre composant électronique configurable), voire un composant électronique complètement sur mesure. Selon une autre mise en oeuvre possible, le circuit électronique d'authentification comprend à la fois un processeur et une mémoire associée (par exemple de type RAM, EEPROM, Flash, ROM, mémoire magnétique, mémoire optique, etc.), la mémoire associée comprenant un programme (stocké dans cette mémoire) apte à exécuter un procédé selon le quatrième mode de réalisation (ou, selon une variante, apte à exécuter une partie substantielle de ce procédé).

Le procédé d'authentification biométrique selon le quatrième mode de réalisation comprend une extraction, par le circuit électronique d'authentification, à partir de l'empreinte biométrique alléguée, de K' éléments principaux allégués VIC'₁, VIC'₂, ... VIC'_{K'}, correspondant chacun à une caractéristique de l'empreinte biométrique alléguée. Selon une mise en oeuvre possible, les éléments principaux allégués sont des voisinages (en anglais : « vicinity ») de minuties d'empreinte digitale. Les explications concernant l'obtention des éléments principaux dans le cadre du deuxième mode de réalisation sont également applicables aux éléments principaux allégués dans le contexte du quatrième mode de réalisation.

Le procédé d'authentification biométrique comprend également une extraction, par le circuit électronique d'authentification, à partir de l'empreinte biométrique alléguée, de (au moins) K' (et selon une mise en oeuvre possible, exactement K') éléments secondaires allégués ANG'₁, ANG'₂, ... ANG'_{K'} correspondant chacun à au moins un paramètre de chacun des K' éléments principaux allégués VIC'₁, VIC'₂, ... VIC'_{K'} respectifs. Selon une mise en oeuvre possible, les éléments secondaires allégués sont, pour chaque voisinage de minuties d'empreinte digitale, l'angle de la minutie centrale de ce voisinage de minuties, ou encore la position du voisinage considéré, ou encore une combinaison de plusieurs paramètres (par exemple l'angle sur trois bits et la position sur deux bits) au sein d'un même élément secondaire (qui dans l'exemple donné occupe donc cinq bits) ou de plusieurs éléments secondaires. Les explications concernant l'obtention des éléments secondaires dans le cadre du deuxième mode de réalisation sont également applicables aux éléments secondaires allégués dans le contexte du quatrième mode de réalisation. Selon une mise en oeuvre possible, le procédé d'authentification biométrique comprend une extraction, par le circuit électronique d'authentification, à partir de l'empreinte biométrique alléguée, de M*K' éléments secondaires allégués ANG'_{1,1}, ANG'_{2,1}, ... ANG'_{K',1}, ..., ANG'_{1,M}, ANG'_{2,M}, ... ANG'_{K',M} correspondant chacun à au moins un paramètre de chacun des K' éléments principaux allégués VIC'₁, VIC'₂, ... VIC'_{K'} respectifs

Le procédé d'authentification biométrique selon le quatrième mode de réalisation comprend une obtention, par le circuit électronique d'authentification, d'une indexation des K' éléments principaux allégués VIC'₁, VIC'₂, ... VIC'_{K'} par rapport à un ensemble indexé de N éléments possibles, cet ensemble étant une base de caractéristiques d'empreintes biométriques. Les explications concernant l'obtention d'une indexation dans le cadre du deuxième mode de réalisation sont également applicables à l'obtention d'une indexation dans le contexte du quatrième mode de réalisation.

Le procédé d'authentification biométrique selon le quatrième mode de réalisation comprend une obtention, par le circuit électronique d'authentification, par un décodage selon un procédé selon le troisième mode de réalisation, d'un polynôme P' (ou plus généralement d'une fonction P'). Ce polynôme P' interpolé obtenu par le procédé de décodage du troisième mode de réalisation est censé correspondre au polynôme P (ou plus généralement à la fonction P) partagé(e) par le circuit d'encodage et par le circuit de décodage.

Le procédé d'authentification biométrique selon le quatrième mode de réalisation comprend une authentification, par le circuit électronique d'authentification, du candidat si le polynôme P' correspond au polynôme P. Selon une mise en oeuvre possible, la question de savoir si les deux polynômes correspondent consiste à vérifier s'ils sont égaux. Selon une mise en oeuvre possible, la question de savoir si les deux polynômes correspondent consiste à vérifier si leurs hachés respectifs sont égaux (le procédé calcule par exemple un haché SHA-1 de chacun des deux polynômes et vérifie si ces deux hachés sont égaux). Ceci s'applique de façon plus générale à une fonction P et à une fonction P'.

Selon un cinquième mode de réalisation, un circuit électronique d'encodage ENC d'informations représentées sous forme d'une fonction P est agencé pour mettre en oeuvre un procédé selon le premier mode de réalisation.

Ce circuit d'encodage comprend un circuit électronique d'obtention des index respectifs de K éléments principaux VIC₁, VIC₂, ... VIC_{K}, correspondant chacun à un élément d'un ensemble indexé de N éléments possibles, dans cet ensemble indexé de N éléments possibles.

Ce circuit d'encodage comprend un circuit électronique d'obtention de K éléments secondaires ANG₁, ANG₂, ... ANG_{K} associés respectivement aux K éléments principaux (VIC₁, VIC₂, ... VIC_{K}), chaque élément secondaire (ANG₁, ANG₂, ... ANG_{K}) pouvant prendre s valeurs.

Ce circuit d'encodage comprend un circuit électronique de génération d'un ensemble indexé de R éléments encodés, à l'aide de la fonction P et d'une fonction injective TR ayant pour ensemble de départ l'ensemble des N index de l'ensemble indexé de N éléments possibles et ayant pour ensemble d'arrivée l'ensemble de départ du polynôme P privé de l'ensemble de départ de la fonction TR, la génération de l'élément encodé d'index i de l'ensemble indexé de N éléments encodés comprenant la génération de s+1 composantes E_VICᵢ, E_ANG_{1,i}, E_ANG_{2,i}, ... E_ANG_{s,i}.

Le circuit électronique de génération est agencé, lorsque l'index i n'est égal à aucun des index des K éléments principaux VIC₁, VIC₂, ... VIC_{K} dans l'ensemble indexé de N éléments possibles, pour générer s+1 composantes simulées.

Le circuit électronique de génération est agencé, lorsque l'index i est égal à l'index d'un (VICⱼ) des K éléments principaux VIC₁, VIC₂, ... VIC_{K} dans l'ensemble indexé de N éléments possibles, pour générer une composante E_VICᵢ égale à P(i) à une première position déterminée des composantes générées, pour générer une composante E_ANG_{f(ANGj),i} égale à P(TR(i)) à une deuxième position déterminée des composantes générées, la deuxième position déterminée étant fonction de l'élément secondaire ANGⱼ correspondant à l'élément principal VICⱼ dont l'index dans l'ensemble indexé de N éléments possibles est l'index i, et pour générer s-1 composantes E_ANG_{1,i}, E_ANG_{2,i}, ... E_ANG_{f(ANGj)-1,i}, E_ANG_{f(ANGj)+1,i}, ... E_ANG_{s,i} simulées.

Selon une mise en oeuvre possible, le(s) circuit(s) électronique(s) d'obtention et le circuit électronique de génération sont chacun un circuit électronique dédié tel qu'un FPGA, un ASIC, un PAL (ou tout autre composant électronique configurable), voire un composant électronique complètement sur mesure. Selon une autre mise en oeuvre possible, chacun de ces circuits électroniques comprend à la fois un processeur et une mémoire associée (par exemple de type RAM, EEPROM, Flash, ROM, mémoire magnétique, mémoire optique, etc.), la mémoire associée comprenant un programme (stocké dans cette mémoire) apte à exécuter le procédé respectif que ce circuit électronique vise à mettre en oeuvre.

Selon un sixième mode de réalisation, un circuit électronique d'enrôlement biométrique est agencé pour mettre en oeuvre un procédé selon le deuxième mode de réalisation.

Le circuit électronique d'enrôlement biométrique comprend un circuit électronique d'obtention d'une empreinte biométrique de référence d'un utilisateur.

Le circuit électronique d'enrôlement biométrique comprend un circuit électronique d'extraction, à partir de l'empreinte biométrique de référence, de K éléments principaux VIC₁, VIC₂, ... VIC_{K}, correspondant chacun à une caractéristique de l'empreinte biométrique de référence et de K éléments secondaires ANG₁, ANG₂, ... ANG_{K} correspondant chacun à au moins un paramètre de chacun des K éléments principaux VIC₁, VIC₂, ... VIC_{K} respectifs.

Le circuit électronique d'enrôlement biométrique comprend un circuit électronique d'obtention d'une indexation des K éléments principaux VIC₁, VIC₂, ... VIC_{K} par rapport à un ensemble indexé de N éléments possibles, cet ensemble étant une base de caractéristiques d'empreintes biométriques.

Le circuit électronique d'enrôlement biométrique comprend un circuit électronique d'obtention d'un ensemble indexé de R éléments encodés grâce à l'encodage, à l'aide d'un circuit électronique d'encodage ENC selon le cinquième mode de réalisation, d'un polynôme P (ou plus généralement d'une fonction P). Selon une mise en oeuvre possible, ledit circuit électronique d'obtention comprend ledit circuit électronique d'encodage ENC. Selon une mise en oeuvre possible, ledit circuit électronique d'encodage ENC est ledit circuit électronique d'obtention.

Selon une mise en oeuvre possible, le(s) circuit(s) électronique(s) d'obtention et le circuit électronique d'extraction sont chacun un circuit électronique dédié tel qu'un FPGA, un ASIC, un PAL (ou tout autre composant électronique configurable), voire un composant électronique complètement sur mesure. Selon une autre mise en oeuvre possible, chacun de ces circuits électroniques comprend à la fois un processeur et une mémoire associée (par exemple de type RAM, EEPROM, Flash, ROM, mémoire magnétique, mémoire optique, etc.), la mémoire associée comprenant un programme (stocké dans cette mémoire) apte à exécuter le procédé respectif que ce circuit électronique vise à mettre en oeuvre.

Selon un septième mode de réalisation, un circuit électronique de décodage DEC d'informations représentées sous forme d'un polynôme est agencé pour mettre en oeuvre un procédé selon le troisième mode de réalisation.

Le circuit électronique de décodage d'informations comprend un circuit électronique d'obtention d'un ensemble indexé de R éléments encodés, censés avoir été encodés sur la base d'une fonction P et d'une fonction injective TR déterminée.

Le circuit électronique de décodage d'informations comprend un circuit électronique d'obtention des index respectifs de K' éléments principaux allégués VIC'₁, VIC'₂, ... VIC'_{K'}, correspondant chacun à un élément d'un ensemble indexé de N éléments possibles servant à obtenir l'ensemble indexé de R éléments encodés, dans cet ensemble indexé de N éléments possibles.

Le circuit électronique de décodage d'informations comprend un circuit électronique d'obtention de K' éléments secondaires allégués ANG'₁, ANG'₂, ... ANG'_{K'} associés respectivement aux K' éléments principaux allégués VIC'₁, VIC'₂, ... VIC'_{K'}, chaque élément secondaire ANG'₁, ANG'₂, ... ANG'_{K'} pouvant prendre s valeurs.

Le circuit électronique de décodage d'informations comprend un circuit électronique d'extraction de chaque élément encodé dont l'index dans l'ensemble indexé de R éléments encodés est égal à l'index de l'un des K' éléments principaux allégués VIC'₁, VIC'₂, ... VIC'_{K'} dans l'ensemble indexé de N éléments possibles.

Le circuit électronique de décodage d'informations comprend un circuit électronique d'obtention, pour chaque élément encodé ainsi extrait, à partir dudit élément encodé, d'un premier point dont l'abscisse est l'index dudit élément encodé dans l'ensemble indexé de N éléments encodés et dont l'ordonnée est la valeur de la composante E_VIC'ᵢ située à une première position déterminée dudit élément encodé, et d'un deuxième point dont l'abscisse est le résultat de l'application de la fonction injective TR à l'index dudit élément encodé dans l'ensemble indexé de N éléments encodés et dont l'ordonnée est la valeur de la composante E_ANG'_{f(ANG'j),i} située à une deuxième position déterminée dudit élément encodé, la deuxième position déterminée étant fonction de l'élément secondaire allégué ANG'ⱼ correspondant à l'élément principal allégué VIC'ⱼ dont l'index dans l'ensemble indexé de N éléments possibles est le même que l'index dudit élément encodé dans l'ensemble indexé de R éléments encodés.

Le circuit électronique de décodage d'informations comprend un circuit électronique d'obtention d'une fonction P', par décodage des points ainsi obtenus.

Selon une mise en oeuvre possible, le(s) circuit(s) électronique(s) d'obtention et le circuit électronique d'extraction sont chacun un circuit électronique dédié tel qu'un FPGA, un ASIC, un PAL (ou tout autre composant électronique configurable), voire un composant électronique complètement sur mesure. Selon une autre mise en oeuvre possible, chacun de ces circuits électroniques comprend à la fois un processeur et une mémoire associée (par exemple de type RAM, EEPROM, Flash, ROM, mémoire magnétique, mémoire optique, etc.), la mémoire associée comprenant un programme (stocké dans cette mémoire) apte à exécuter le procédé respectif que ce circuit électronique vise à mettre en oeuvre.

Selon un huitième mode de réalisation, un circuit électronique d'authentification biométrique est agencé pour mettre en oeuvre un procédé selon le quatrième mode de réalisation.

Le circuit électronique d'authentification biométrique comprend un circuit électronique d'obtention d'une fonction P et d'un ensemble indexé de R éléments encodés lors d'un procédé d'enrôlement à l'aide de la fonction P.

Le circuit électronique d'authentification biométrique comprend un circuit électronique d'obtention d'une empreinte biométrique alléguée d'un candidat à l'authentification.

Le circuit électronique d'authentification biométrique comprend un circuit électronique d'extraction, à partir de l'empreinte biométrique alléguée, de K' éléments principaux allégués VIC'₁, VIC'₂, ... VIC'_{K'}, correspondant chacun à une caractéristique de l'empreinte biométrique alléguée et de K' éléments secondaires allégués ANG'₁, ANG'₂, ... ANG'_{K'} correspondant chacun à au moins un paramètre de chacun des K' éléments principaux allégués VIC'₁, VIC'₂, ... VIC'_{K'} respectifs.

Le circuit électronique d'authentification biométrique comprend un circuit électronique d'obtention d'une indexation des K' éléments principaux allégués VIC'₁, VIC'₂, ... VIC'_{K'} par rapport à un ensemble indexé de N éléments possibles, cet ensemble étant une base de caractéristiques d'empreintes biométriques.

Le circuit électronique d'authentification biométrique comprend un circuit électronique d'obtention, par un circuit électronique de décodage DEC selon le septième mode de réalisation, d'une fonction P'. Selon une mise en oeuvre possible, ce circuit électronique d'obtention comprend ledit circuit électronique de décodage. Selon une mise en oeuvre possible, le circuit électronique de décodage est le circuit électronique d'obtention.

Le circuit électronique d'authentification biométrique comprend un circuit électronique de vérification agencé pour authentifier le candidat si la fonction P' correspond à la fonction P.

Selon une mise en oeuvre possible, le(s) circuit(s) électronique(s) d'obtention, le circuit électronique d'extraction et le circuit électronique de vérification sont chacun un circuit électronique dédié tel qu'un FPGA, un ASIC, un PAL (ou tout autre composant électronique configurable), voire un composant électronique complètement sur mesure. Selon une autre mise en oeuvre possible, chacun de ces circuits électroniques comprend à la fois un processeur et une mémoire associée (par exemple de type RAM, EEPROM, Flash, ROM, mémoire magnétique, mémoire optique, etc.), la mémoire associée comprenant un programme (stocké dans cette mémoire) apte à exécuter le procédé respectif que ce circuit électronique vise à mettre en oeuvre.

Selon un neuvième mode de réalisation, un programme d'ordinateur comprend une suite d'instructions qui lorsqu'elles sont exécutées par un processeur mettent en oeuvre un procédé selon l'un des premier au quatrième modes de réalisation. Ce programme peut être rédigé par exemple en assembleur, en langage C, ou dans tout autre langage de programmation approprié.

Selon un dixième mode de réalisation, un support de stockage non transitoire lisible par ordinateur stocke un programme d'ordinateur selon le neuvième mode de réalisation. Ce support de stockage est par exemple une mémoire de type RAM sauvegardée par batterie, ou EEPROM, ou ROM, ou Flash, ou encore une mémoire magnétique ou une mémoire optique.

Les caractéristiques décrites vis-à-vis des procédés selon l'invention se transposent aux dispositifs correspondants (circuits) selon l'invention, et réciproquement.

Bien entendu, la présente invention ne se limite pas aux formes de réalisation décrites ci-avant à titre d'exemples non limitatifs. En particulier, l'invention ne se limite pas aux techniques biométriques s'appuyant sur des empreintes digitales.

## Revendications

1. Procédé d'encodage de K éléments principaux et de K éléments secondaires à l'aide d'une fonction secrète P, comprenant :
/a/ une obtention, par un circuit électronique d'encodage (ENC), des index respectifs des K éléments principaux (VIC₁, VIC₂, ... VIC_{K}), correspondant chacun à un élément d'un ensemble indexé de N éléments possibles, dans cet ensemble indexé de N éléments possibles,
/b/ une obtention, par le circuit électronique d'encodage (ENC), des K éléments secondaires (ANG₁, ANG₂, ... ANG_{K}) associés respectivement aux K éléments principaux (VIC₁, VIC₂, ... VIC_{K}), chaque élément secondaire (ANG₁, ANG₂, ... ANG_{K}) pouvant prendre s valeurs,
/c/ une génération, par le circuit électronique d'encodage (ENC), d'un ensemble indexé de R éléments encodés comprenant K éléments principaux encodés, R étant un entier compris entre K+1 et N, à l'aide de la fonction P et d'une fonction injective TR ayant pour ensemble de départ l'ensemble des N index de l'ensemble indexé de N éléments possibles et ayant pour ensemble d'arrivée l'ensemble de départ de la fonction P privé de l'ensemble de départ de la fonction TR, une génération de l'élément encodé d'index i de l'ensemble indexé de R éléments encodés comprenant une génération de s+1 composantes (E_VICᵢ, E_ANG_{1,i}, E_ANG_{2,i}, ... E_ANG_{s,i}), à savoir :
/c1/ lorsque l'index i n'est égal à aucun des index des K éléments principaux (VIC₁, VIC₂, ... VIC_{K}) dans l'ensemble indexé de N éléments possibles, une génération, par le circuit électronique d'encodage (ENC), de s+1 composantes simulées, et
/c2/ lorsque l'index i est égal à l'index d'un (VICⱼ) des K éléments principaux (VIC₁, VIC₂, ... VIC_{K}) dans l'ensemble indexé de N éléments possibles,
/c2A/ une génération, par le circuit électronique d'encodage (ENC), d'un élément principal encodé sous la forme d'une composante (E_VICᵢ) égale à P(i) à une première position déterminée des composantes générées,
/c2B/ une génération, par le circuit électronique d'encodage (ENC), d'une composante (E_ANG_{f(ANGj),i}) obtenue à partir de P(TR(i)) à une deuxième position déterminée des composantes générées, la deuxième position déterminée étant fonction de l'élément secondaire (ANGⱼ) correspondant à l'élément principal (VICⱼ) dont l'index dans l'ensemble indexé de N éléments possibles est l'index i, et
/c2C/ une génération, par le circuit électronique d'encodage (ENC), de s-1 composantes (E_ANG_{1,i}, E_ANG_{2,i}, ... E_ANG_{f(ANGj)-1,i}, E_ANG_{f(ANGj)+1,i}, ... E_ANG_{s,i}) simulées.

2. Procédé d'enrôlement biométrique, comprenant :
/1/ une obtention, par un circuit électronique d'enrôlement, d'une empreinte biométrique de référence d'un utilisateur,
/2/ une extraction, par le circuit électronique d'enrôlement, à partir de l'empreinte biométrique de référence, de K éléments principaux (VIC₁, VIC₂, ... VIC_{K}), correspondant chacun à une caractéristique de l'empreinte biométrique de référence et de K éléments secondaires (ANG₁, ANG₂, ... ANG_{K}) correspondant chacun à au moins un paramètre de chacun des K éléments principaux (VIC₁, VIC₂, ... VIC_{K}) respectifs,
/3/ une obtention, par le circuit électronique d'enrôlement, d'une indexation des K éléments principaux (VIC₁, VIC₂, ... VIC_{K}) par rapport à un ensemble indexé de N éléments possibles, cet ensemble étant une base de caractéristiques d'empreintes biométriques,
/4/ une obtention, par le circuit électronique d'enrôlement, d'un ensemble indexé de R éléments résultant de l'encodage des K éléments principaux et des K éléments secondaires à l'aide d'une fonction secrète P selon le procédé de la revendication 1.

3. Procédé de décodage d'informations représentées sous forme d'une fonction secrète, à partir d'un ensemble indexé de R éléments encodés, de K' éléments principaux allégués et de K' éléments secondaires allégués, comprenant :
/d/ une obtention, par un circuit électronique de décodage (DEC), de l'ensemble indexé de R éléments encodés,
/e/ une obtention, par le circuit électronique de décodage (DEC), des index respectifs des K' éléments principaux allégués (VIC'₁, VIC'₂, ... VIC'_{K'}), correspondant chacun à un élément d'un ensemble indexé de N éléments possibles servant à obtenir l'ensemble indexé de R éléments encodés, dans cet ensemble indexé de N éléments possibles,
/f/ une obtention, par le circuit électronique de décodage (DEC), des K' éléments secondaires allégués (ANG'₁, ANG'₂, ... ANG'_{K'}) associés respectivement aux K' éléments principaux allégués (VIC'₁, VIC'₂, ... VIC'_{K'}), chaque élément secondaire (ANG'₁, ANG'₂, ... ANG'_{K'}) pouvant prendre s valeurs,
/g/ une extraction, par le circuit électronique de décodage (DEC), de chaque élément encodé dont l'index dans l'ensemble indexé de R éléments encodés est égal à l'index de l'un des K' éléments principaux allégués (VIC'₁, VIC'₂, ... VIC'_{K'}) dans l'ensemble indexé de N éléments possibles,
/h/ pour chaque élément encodé ainsi extrait, une obtention, par le circuit électronique de décodage (DEC), à partir dudit élément encodé, d'un premier point dont l'abscisse est l'index dudit élément encodé dans l'ensemble indexé de R éléments encodés et dont l'ordonnée est la valeur de la composante (E_VIC'ᵢ) située à une première position déterminée dudit élément encodé, et d'un deuxième point dont l'abscisse est le résultat de l'application d'une fonction injective TR déterminée à l'index dudit élément encodé dans l'ensemble indexé de R éléments encodés et dont l'ordonnée est la valeur de la composante (E_ANG'_{f(ANG'j),i}) située à une deuxième position déterminée dudit élément encodé, la deuxième position déterminée étant fonction de l'élément secondaire allégué (ANG'ⱼ) correspondant à l'élément principal allégué (VIC'ⱼ) dont l'index dans l'ensemble indexé de N éléments possibles est le même que l'index dudit élément encodé dans l'ensemble indexé de R éléments encodés,
/i/ une obtention, par le circuit électronique de décodage (DEC), d'une fonction P', par décodage des points ainsi obtenus.

4. Procédé d'authentification biométrique, comprenant :
/5/ une obtention, par un circuit électronique d'authentification, d'une fonction P et d'un ensemble indexé de R éléments encodés,
/6/ une obtention, par le circuit électronique d'authentification, d'une empreinte biométrique alléguée d'un candidat à l'authentification,
/7/ une extraction, par le circuit électronique d'authentification, à partir de l'empreinte biométrique alléguée, de K' éléments principaux allégués (VIC'₁, VIC'₂, ... VIC'_{K'}), correspondant chacun à une caractéristique de l'empreinte biométrique alléguée et de K' éléments secondaires allégués (ANG'₁, ANG'₂, ... ANG'_{K'}) correspondant chacun à au moins un paramètre de chacun des K' éléments principaux allégués (VIC'₁, VIC'₂, ... VIC'_{K'}) respectifs,
/8/ une obtention, par le circuit électronique d'authentification, d'une indexation des K' éléments principaux allégués (VIC'₁, VIC'₂, ... VIC'_{K'}) par rapport à un ensemble indexé de N éléments possibles, cet ensemble étant une base de caractéristiques d'empreintes biométriques,
/9/ une obtention, par le circuit électronique d'authentification, d'une fonction P' par un décodage selon le procédé de la revendication 3 à partir de l'ensemble indexé de R éléments encodés, des K' éléments principaux allégués et des K' éléments secondaires allégués,
/10/ une authentification, par le circuit électronique d'authentification, du candidat si la fonction P' correspond à la fonction P.

5. Circuit électronique d'encodage (ENC) de K éléments principaux et de K éléments secondaires à l'aide d'une fonction secrète P, comprenant :
un circuit électronique d'obtention des index respectifs des K éléments principaux (VIC₁, VIC₂, ... VIC_{K}), correspondant chacun à un élément d'un ensemble indexé de N éléments possibles, dans cet ensemble indexé de N éléments possibles,
un circuit électronique d'obtention des K éléments secondaires (ANG₁, ANG₂, ... ANG_{K}) associés respectivement aux K éléments principaux (VIC₁, VIC₂, ... VIC_{K}), chaque élément secondaire (ANG₁, ANG₂, ... ANG_{K}) pouvant prendre s valeurs,
un circuit électronique de génération d'un ensemble indexé de R éléments encodés, à l'aide de la fonction P et d'une fonction injective TR ayant pour ensemble de départ l'ensemble des N index de l'ensemble indexé de N éléments possibles et ayant pour ensemble d'arrivée l'ensemble de départ de la fonction P privé de l'ensemble de départ de la fonction TR, la génération de l'élément encodé d'index i de l'ensemble indexé de R éléments encodés comprenant la génération de s+1 composantes (E_VICᵢ, E_ANG_{1,i}, E_ANG_{2,i}, ... E_ANG_{s,i}),
le circuit électronique de génération étant agencé, lorsque l'index i n'est égal à aucun des index des K éléments principaux (VIC₁, VIC₂, ... VIC_{K}) dans l'ensemble indexé de N éléments possibles, pour générer s+1 composantes simulées, et
le circuit électronique de génération étant agencé, lorsque l'index i est égal à l'index d'un (VICⱼ) des K éléments principaux (VIC₁, VIC₂, ... VIC_{K}) dans l'ensemble indexé de N éléments possibles, pour générer une composante (E_VICᵢ) égale à P(i) à une première position déterminée des composantes générées, pour générer une composante (E_ANG_{f(ANGj),i}) obtenue à partir de P(TR(i)) à une deuxième position déterminée des composantes générées, la deuxième position déterminée étant fonction de l'élément secondaire (ANGⱼ) correspondant à l'élément principal (VICⱼ) dont l'index dans l'ensemble indexé de N éléments possibles est l'index i, et pour générer s-1 composantes (E_ANG_{1,i}, E_ANG_{2,i}, ... E_ANG_{f(ANGj)-1,i}, E_ANG_{f(ANGj)+1,i}, ... E_ANG_{s,i}) simulées.

6. Circuit électronique d'enrôlement biométrique, comprenant :
un circuit électronique d'obtention d'une empreinte biométrique de référence d'un utilisateur,
un circuit électronique d'extraction, à partir de l'empreinte biométrique de référence, de K éléments principaux (VIC₁, VIC₂, ... VIC_{K}), correspondant chacun à une caractéristique de l'empreinte biométrique de référence et de K éléments secondaires (ANG₁, ANG₂, ... ANG_{K}) correspondant chacun à au moins un paramètre de chacun des K éléments principaux (VIC₁, VIC₂, ... VIC_{K}) respectifs,
un circuit électronique d'obtention d'une indexation des K éléments principaux (VIC₁, VIC₂, ... VIC_{K}) par rapport à un ensemble indexé de N éléments possibles, cet ensemble étant une base de caractéristiques d'empreintes biométriques,
un circuit électronique d'obtention d'un ensemble indexé de R éléments résultant de l'encodage des K éléments principaux et des K éléments secondaires à l'aide d'une fonction secrète P au moyen du circuit d'encodage de la revendication 5.

7. Circuit électronique de décodage (DEC) d'informations représentées sous forme d'une fonction secrète, à partir d'un ensemble indexé de R éléments encodés, de K' éléments principaux allégués et de K' éléments secondaires allégués, comprenant :
un circuit électronique d'obtention de l'ensemble indexé de R éléments encodés,
un circuit électronique d'obtention des index respectifs des K' éléments
principaux allégués (VIC'₁, VIC'₂, ... VIC'_{K'}), correspondant chacun à un élément d'un ensemble indexé de N éléments possibles servant à obtenir l'ensemble indexé de R éléments encodés, dans cet ensemble indexé de N éléments possibles,
un circuit électronique d'obtention des K' éléments secondaires allégués (ANG'₁, ANG'₂, ... ANG'_{K'}) associés respectivement aux K' éléments principaux allégués (VIC'₁, VIC'₂, ... VIC'_{K'}), chaque élément secondaire (ANG'₁, ANG'₂, ... ANG'_{K'}) pouvant prendre s valeurs,
un circuit électronique d'extraction de chaque élément encodé dont l'index dans l'ensemble indexé de R éléments encodés est égal à l'index de l'un des K' éléments principaux allégués (VIC'₁, VIC'₂, ... VIC'_{K'}) dans l'ensemble indexé de N éléments possibles,
un circuit électronique d'obtention, pour chaque élément encodé ainsi extrait, à partir dudit élément encodé, d'un premier point dont l'abscisse est l'index dudit élément encodé dans l'ensemble indexé de R éléments encodés et dont l'ordonnée est la valeur de la composante (E_VIC'ᵢ) située à une première position déterminée dudit élément encodé, et d'un deuxième point dont l'abscisse est le résultat de l'application d'une fonction injective TR déterminée à l'index dudit élément encodé dans l'ensemble indexé de R éléments encodés et dont l'ordonnée est la valeur de la composante (E_ANG'_{f(ANG'j),i}) située à une deuxième position déterminée dudit élément encodé, la deuxième position déterminée étant fonction de l'élément secondaire allégué (ANG'ⱼ) correspondant à l'élément principal allégué (VIC'ⱼ) dont l'index dans l'ensemble indexé de N éléments possibles est le même que l'index dudit élément encodé dans l'ensemble indexé de R éléments encodés,
un circuit électronique d'obtention d'une fonction P', par décodage des points ainsi obtenus.

8. Circuit électronique d'authentification biométrique, comprenant :
un circuit électronique d'obtention d'une fonction P et d'un ensemble indexé de R éléments encodés,
un circuit électronique d'obtention d'une empreinte biométrique alléguée d'un candidat à l'authentification,
un circuit électronique d'extraction, à partir de l'empreinte biométrique alléguée, de K' éléments principaux allégués (VIC'₁, VIC'₂, ... VIC'_{K'}), correspondant chacun à une caractéristique de l'empreinte biométrique alléguée et de K' éléments secondaires allégués (ANG'₁, ANG'₂, ... ANG'_{K'}) correspondant chacun à au moins un paramètre de chacun des K' éléments principaux allégués (VIC'₁, VIC'₂, ... VIC'_{K'}) respectifs,
un circuit électronique d'obtention d'une indexation des K' éléments principaux allégués (VIC'₁, VIC'₂, ... VIC'_{K'}) par rapport à un ensemble indexé de N éléments possibles, cet ensemble étant une base de caractéristiques d'empreintes biométriques,
un circuit électronique d'obtention d'une fonction P' par un décodage (DEC) au moyen du circuit électronique de la revendication 7 à partir de l'ensemble indexé de R éléments encodés, des K' éléments principaux allégués et des K' éléments secondaires allégués,
un circuit électronique de vérification agencé pour authentifier le candidat si la fonction P' correspond à la fonction P.

9. Programme d'ordinateur comprenant une suite d'instructions qui, lorsqu'elles sont exécutées par un processeur, conduisent le processeur à mettre en oeuvre un procédé selon l'une des revendications 1 à 4.

10. Support de stockage non transitoire lisible par ordinateur, ledit support stockant un programme d'ordinateur selon la revendication 9.

## Patentansprüche

1. Verfahren zum Codieren von K Hauptelementen und K Sekundärelementen mit Hilfe einer Geheimfunktion P, das Folgendes umfasst:
/a/ Erhalten der jeweiligen Indizes der K Hauptelemente (VIC₁, VIC₂, ... VIC_{K}), die jeweils einem Element einer indizierten Menge von N möglichen Elementen entsprechen, in dieser indizierten Menge von N möglichen Elementen durch eine elektronische Codierschaltung (ENC),
/b/ Erhalten der K Sekundärelemente (ANG₁, ANG₂, ... ANG_{K}), die jeweils den K Hauptelementen (VIC₁, VIC₂, ... VIC_{K}) zugeordnet sind, durch die elektronische Codierschaltung (ENC), wobei jedes Sekundärelement (ANG₁, ANG₂, ... ANG_{K}) s Werte annehmen kann,
/c/ Erzeugen einer indizierten Menge von R codierten Elementen mit K codierten Hauptelementen durch die elektronische Codierschaltung (ENC), wobei R eine ganze Zahl zwischen K+1 und N ist, mit Hilfe der Funktion P und einer injektiven Funktion TR mit der Menge der N Indizes der indizierten Menge von N möglichen Elementen als Ausgangsmenge und mit der Ausgangsmenge der Funktion P ohne die Ausgangsmenge der Funktion TR als Zielmenge, wobei eine Erzeugung des codierten Elements des Index i der indizierten Menge von R codierten Elementen eine Erzeugung von s+1 Komponenten (E_VICᵢ, E_ANG_{1,i}, E_ANG_{2,i}, ... E_ANG_{s,i}) umfasst, nämlich:
/c1/ wenn der Index i nicht gleich irgendeinem der Indizes der K Hauptelemente (VIC₁, VIC₂, ... VIC_{K}) in der indizierten Menge von N möglichen Elementen ist, Erzeugen von s+1 simulierten Komponenten durch die elektronische Codierschaltung (ENC), und
/c2/ wenn der Index i gleich dem Index von einem (VICⱼ) der K Hauptelemente (VIC₁, VIC₂, ... VIC_{K}) in der indizierten Menge von N möglichen Elementen ist,
/c2A/ Erzeugen eines codierten Hauptelements in Form einer Komponente (E_VICᵢ) gleich P (i) in einer ersten bestimmten Position der erzeugten Komponenten durch die elektronische Codierschaltung (ENC),
/c2B/ Erzeugen einer Komponente (E_ANG_{f(ANGj),i}), die anhand von P(TR(i)) erhalten wird, in einer zweiten bestimmten Position der erzeugten Komponenten durch die elektronische Codierschaltung (ENC), wobei die zweite bestimmte Position eine Funktion des Sekundärelements (ANGⱼ) ist, das dem Hauptelement (VICⱼ) entspricht, dessen Index in der indizierten Menge von N möglichen Elementen der Index i ist, und
/c2C/ Erzeugen von s-1 simulierten Komponenten (E_ANG_{1,i}, E_ANG_{2,}i, ... E_ANG_{f(ANGj)-1,i}, E_ANG_{f(ANGj)+1,i}, ... E_ANG_{s,i} durch die elektronische Codierschaltung (ENC).

2. Verfahren zur biometrischen Musterung, das Folgendes umfasst:
/1/ Erhalten eines biometrischen Referenzabdrucks eines Benutzers durch eine elektronische Musterungsschaltung,
/2/ Extrahieren von K Hauptelementen (VIC₁, VIC₂, ... VIC_{K}), die jeweils einem Merkmal des biometrischen Referenzabdrucks entsprechen, und von K Sekundärelementen (ANG₁, ANG₂, ... ANG_{K}, die jeweils mindestens einem Parameter von jedem der jeweiligen K Hauptelemente (VIC₁, VIC₂, ... VIC_{K}) entsprechen, durch die elektronische Musterungsschaltung anhand des biometrischen Referenzabdrucks,
/3/ Erhalten einer Indizierung der K Hauptelemente (VIC₁, VIC₂, ... VIC_{K}) in Bezug auf eine indizierte Menge von N möglichen Elementen durch die elektronische Musterungsschaltung, wobei diese Menge eine Basis von Merkmalen von biometrischen Abdrücken ist,
/4/ Erhalten einer indizierten Menge von R Elementen, die sich aus der Codierung der K Hauptelemente und der K Sekundärelemente mit Hilfe einer Geheimfunktion P gemäß dem Verfahren von Anspruch 1 ergeben, durch die elektronische Musterungsschaltung.

3. Verfahren zum Decodieren von Informationen, die in Form einer Geheimfunktion dargestellt sind, anhand einer indizierten Menge von R codierten Elementen, von K' vorgegebenen Hauptelementen und K' vorgegebenen Sekundärelementen, das Folgendes umfasst:
/d/ Erhalten der indizierten Menge von R codierten Elementen durch eine elektronische Decodierschaltung (DEC),
/e/ Erhalten der jeweiligen Indizes der K' vorgegebenen Hauptelemente (VIC'₁, VIC'₂, ... VIC'_{K'}), die jeweils einem Element einer indizierten Menge von N möglichen Elementen entsprechen, die zum Erhalten der indizierten Menge von R codierten Elementen dienen, in dieser indizierten Menge von N möglichen Elementen durch die elektronische Decodierschaltung (DEC),
/f/ Erhalten der K' vorgegebenen Sekundärelemente (ANG'₁, ANG'₂, ... ANG'_{K'}), die eweils den K' vorgegebenen Hauptelementen (VIC'₁, VIC'₂, ... VIC'_{K'}) zugeordnet sind, durch die elektronische Decodierschaltung (DEC), wobei jedes Sekundärelement (ANG'₁, ANG'₂, ... ANG'_{K'}) s Werte annehmen kann,
/g/ Extrahieren von jedem codierten Element, dessen Index in der indizierten Menge von R codierten Elementen gleich dem Index von einem der vorgegebenen K' Hauptelemente (VIC'₁, VIC'₂, ... VIC'_{K'}) in der indizierten Menge von N möglichen Elementen ist, durch die elektronische Decodierschaltung (DEC),
/h/ für jedes so extrahierte codierte Element Erhalten eines ersten Punkts, dessen Abszisse der Index des codierte Elements in der indizierten Menge von R codierten Elementen ist und dessen Ordinate der Wert der Komponente (E_VIC'ᵢ) ist, der in einer ersten bestimmten Position des codierten Elements liegt, und eines zweiten Punkts, dessen Abszisse das Ergebnis der Anwendung einer bestimmten injektiven Funktion TR auf den Index des codierten Elements in der indizierten Menge von R codierten Elementen ist und dessen Ordinate der Wert der Komponente (E_ANG'_{f(ANG'j),i}) ist, der in einer zweiten bestimmten Position des codierten Elements liegt, durch die elektronische Decodierschaltung (DEC) anhand des codierten Elements, wobei die zweite bestimmte Position eine Funktion des vorgegebenen Sekundärelements (ANG'ⱼ) ist, das dem vorgegebenen Hauptelement (VIC'ⱼ) entspricht, dessen Index in der indizierten Menge von N möglichen Elementen derselbe wie der Index des codierten Elements in der indizierten Menge von R codierten Elementen ist,
/i/ Erhalten einer Funktion P' durch Decodierung der so erhaltenen Punkte durch die elektronische Decodierschaltung (DEC).

4. Verfahren zur biometrischen Authentifizierung, das Folgendes umfasst:
/5/ Erhalten einer Funktion P und einer indizierten Menge von R codierten Elementen durch eine elektronische Authentifizierungsschaltung,
/6/ Erhalten eines vorgegebenen biometrischen Abdrucks eines Kandidaten für die Authentifizierung durch die elektronische Authentifizierungsschaltung,
/7/ Extrahieren von K' vorgegebenen Hauptelementen (VIC'₁, VIC'₂, ... VIC'_{K'}), die jeweils einem Merkmal des vorgegebenen biometrischen Abdrucks entsprechen, und von K' vorgegebenen Sekundärelementen (ANG'₁, ANG'₂, ... ANG'_{K'}), die jeweils mindestens einem Parameter von jedem der jeweiligen K' vorgegebenen Hauptelemente (VIC'₁, VIC'₂, ... VIC'_{K'}) entsprechen, durch die elektronische Authentifizierungsschaltung anhand des vorgegebenen biometrischen Abdrucks,
/8/ Erhalten einer Indizierung der K' vorgegebenen Hauptelemente (VIC'₁, VIC'₂, ... VIC'_{K'}) in Bezug auf eine indizierte Menge von N möglichen Elementen durch die elektronische Authentifizierungsschaltung, wobei diese Menge eine Basis von Merkmalen von biometrischen Abdrücken ist,
/9/ Erhalten einer Funktion P' durch eine Decodierung gemäß dem Verfahren von Anspruch 3 anhand der indizierten Menge von R codierten Elementen, der K' vorgegebenen Hauptelemente und der K' vorgegebenen Sekundärelemente durch die elektronische Authentifizierungsschaltung,
/10/ Authentifizieren des Kandidaten durch die elektronische Authentifizierungsschaltung, wenn die Funktion P' der Funktion P entspricht.

5. Elektronische Codierschaltung (ENC) für K Hauptelemente und K Sekundärelemente mit Hilfe einer Geheimfunktion P, die Folgendes umfasst:
eine elektronische Schaltung zum Erhalten der jeweiligen Indizes der K Hauptelemente (VIC₁, VIC₂, ... VIC_{K}), die jeweils einem Element einer indizierten Menge von N möglichen Elementen entsprechen, in dieser indizierten Menge von N möglichen Elementen,
eine elektronische Schaltung zum Erhalten der K Sekundärelemente (ANG₁, ANG₂, ... ANG_{K}), die jeweils den K Hauptelementen (VIC₁, VIC₂, ... VIC_{K}) zugeordnet sind, wobei jedes Sekundärelement (ANG₁, ANG₂, ... ANG_{K}) s Werte annehmen kann,
eine elektronische Schaltung zum Erzeugen einer indizierten Menge von R codierten Elementen mit Hilfe der Funktion P und einer injektiven Funktion TR mit der Menge der N Indizes der indizierten Menge von N möglichen Elementen als Ausgangsmenge und mit der Ausgangsmenge der Funktion P ohne die Ausgangsmenge der Funktion TR als Zielmenge, wobei die Erzeugung des codierten Elements mit dem Index i der indizierten Menge von R codierten Elementen die Erzeugung von s+1 Komponenten (E_VICᵢ, E_ANG_{1,i}, E_ANG_{2,i}, ... E_ANG_{s,i}) umfasst,
wobei die elektronische Erzeugungsschaltung beschaffen ist, wenn der Index i nicht gleich irgendeinem der Indizes der K Hauptelemente (VIC₁, VIC₂, ... VIC_{K}) in der indizierten Menge von N möglichen Elementen ist, um s+1 simulierte Komponenten zu erzeugen, und
wobei die elektronische Erzeugungsschaltung beschaffen ist, wenn der Index i gleich dem Index von einem (VICⱼ) der K Hauptelemente (VIC₁, VIC₂, ... VIC_{K}) in der indizierten Menge von N möglichen Elementen ist, um eine Komponente (E_VICᵢ) gleich P(i) in einer ersten bestimmten Position der erzeugten Komponenten zu erzeugen, um eine Komponente (E_ANG_{f(ANGj)},ᵢ), die anhand von P(TR(i)) erhalten wird, in einer zweiten bestimmten Position der erzeugten Komponenten zu erzeugen, wobei die zweite bestimmte Position eine Funktion des Sekundärelements (ANGⱼ) ist, das dem Hauptelement (VICⱼ) entspricht, dessen Index in der indizierten Menge von N möglichen Elementen der Index i ist, und um s-1 simulierte Komponenten (E_ANG_{1,i}, E_ANG_{2,i}, ... E_ANG_{f(ANGj)-1,i}, E_ANG_{f(ANGj)+1,i}, ... E_ANG_{s,i}) zu erzeugen.

6. Elektronische Schaltung zur biometrischen Musterung, die Folgendes umfasst:
eine elektronische Schaltung zum Erhalten eines biometrischen Referenzabdrucks eines Benutzers,
eine elektronische Schaltung zum Extrahieren von K Hauptelementen (VIC₁, VIC₂, ... VIC_{K}), die jeweils einem Merkmal des biometrischen Referenzabdrucks entsprechen, und von K Sekundärelementen (ANG₁, ANG₂, ... ANG_{K}), die jeweils mindestens einem Parameter von jedem der jeweiligen K Hauptelemente (VIC₁, VIC₂, ... VIC_{K}) entsprechen, anhand des biometrischen Referenzabdrucks,
eine elektronische Schaltung zum Erhalten einer Indizierung der K Hauptelemente (VIC₁, VIC₂, ... VIC_{K}) in Bezug auf eine indizierte Menge von N möglichen Elementen, wobei diese Menge eine Basis von Merkmalen von biometrischen Abdrücken ist,
eine elektronische Schaltung zum Erhalten einer indizierten Menge von R Elementen, die sich aus dem Codieren der K Hauptelemente und der K Sekundärelemente mit Hilfe einer Geheimfunktion P mittels der Codierschaltung von Anspruch 5 ergeben.

7. Elektronische Schaltung zum Decodieren (DEC) von Informationen, die in Form einer Geheimfunktion dargestellt sind, anhand einer indizierten Menge von R codierten Elementen, von K' vorgegebenen Hauptelementen und von K' vorgegebenen Sekundärelementen, die Folgendes umfasst:
eine elektronische Schaltung zum Erhalten der indizierten Menge von R codierten Elementen,
eine elektronische Schaltung zum Erhalten der jeweiligen Indizes der vorgegebenen K' Hauptelemente (VIC'₁, VIC'₂, ... VIC'_{K'}), die jeweils einem Element einer indizierten Menge von N möglichen Elementen entsprechen, die zum Erhalten der indizierten Menge von R codierten Elementen dienen, in dieser indizierten Menge von N möglichen Elementen,
eine elektronische Schaltung zum Erhalten der K' vorgegebenen Sekundärelemente (ANG'₁, ANG'₂, ... ANG'_{K'}), die jeweils den K' vorgegebenen Hauptelementen (VIC'₁, VIC'₂, ... VIC'_{K'}) zugeordnet sind, wobei jedes Sekundärelement (ANG'₁, ANG'₂, ... ANG'_{K'}) s Werte annehmen kann,
eine elektronische Schaltung zum Extrahieren jedes codieren Elements, dessen Index in der indizierten Menge von R codierten Elementen gleich dem Index von einem der vorgegebenen K' Hauptelemente (VIC'₁, VIC'₂, ... VIC'_{K'}) in der indizierten Menge von N möglichen Elementen ist,
eine elektronische Schaltung zum Erhalten eines ersten Punkts, dessen Abszisse der Index des codierten Elements in der indizierten Menge von R codierten Elementen ist und dessen Ordinate der Wert der Komponente (E_VIC'ᵢ) ist, der in einer ersten bestimmten Position des codierten Elements liegt, und eines zweiten Punkts, dessen Abszisse das Ergebnis der Anwendung einer bestimmten injektiven Funktion TR auf den Index des codierten Elements in der indizierten Menge von R codierten Elementen ist und dessen Ordinate der Wert der Komponente (E_ANG'_{f(ANG'j),i}) ist, der in einer zweiten bestimmten Position des codierten Elements liegt, für jedes so extrahierte codierte Element anhand des codierten Elements, wobei die zweite bestimmte Position eine Funktion des vorgegebenen Sekundärelements (ANG'ⱼ) ist, das dem vorgegebenen Hauptelement (VIC'ⱼ) entspricht, dessen Index in der indizierten Menge von N möglichen Elementen derselbe wie der Index des codierte Elements in der indizierten Menge von R codierten Elementen ist,
eine elektronische Schaltung zum Erhalten einer Funktion P' durch Decodieren der so erhaltenen Punkte.

8. Elektronische Schaltung zur biometrischen Authentifizierung, die Folgendes umfasst:
eine elektronische Schaltung zum Erhalten einer Funktion P und einer indizierten Menge von R codierten Elementen,
eine elektronische Schaltung zum Erhalten eines vorgegebenen biometrischen Abdrucks eines Kandidaten für die Authentifizierung,
eine elektronische Schaltung zum Extrahieren von K' vorgegebenen Hauptelementen (VIC'₁, VIC'₂, ... VIC'_{K'}), die jeweils einem Merkmal des vorgegebenen biometrischen Abdrucks entsprechen, und von K' vorgegebenen Sekundärelementen (ANG'₁, ANG'₂, ... ANG'_{K'}), die jeweils mindestens einem Parameter von jedem der jeweiligen K' vorgegebenen Hauptelemente (VIC'₁, VIC'₂, ... VIC'_{K'}) entsprechen, anhand des vorgegebenen biometrischen Abdrucks,
eine elektronische Schaltung zum Erhalten einer Indizierung der K' vorgegebenen Hauptelemente (VIC'₁, VIC'₂, ... VIC'_{K'}) in Bezug auf eine indizierte Menge von N möglichen Elementen, wobei diese Menge eine Basis von Merkmalen von biometrischen Abdrücken ist,
eine elektronische Schaltung zum Erhalten einer Funktion P' durch eine Decodierung (DEC) mittels der elektronischen Schaltung von Anspruch 7 anhand der indizierten Menge von R codierten Elementen, der K' vorgegebenen Hauptelemente und der K' vorgegebenen Sekundärelemente,
eine elektronische Schaltung zur Überprüfung, die beschaffen ist, um den Kandidaten zu authentifizieren, wenn die Funktion P' der Funktion P entspricht.

9. Computerprogramm mit einer Folge von Befehlen, die, wenn sie durch einen Prozessor ausgeführt werden, den Prozessor dazu bringen, ein Verfahren nach einem der Ansprüche 1 bis 4 auszuführen.

10. Nichtflüchtiges Speichermedium, das durch einen Computer lesbar ist, wobei das Medium ein Computerprogramm nach Anspruch 9 speichert.

## Claims

1. Method for encoding K main elements and K secondary elements using a secret function P, comprising:
/a/ obtaining, by an encoding electronic circuit (ENC), respective indexes of the K main elements (VIC₁, VIC₂, ... VIC_{K}), each corresponding to an element of an indexed set of N possible elements, in this indexed set of N possible elements,
/b/ obtaining, by the encoding electronic circuit (ENC), the K secondary elements (ANG₁, ANG₂, ... ANG_{K}) respectively associated with the K main elements (VIC₁, VIC₂, ... VIC_{K}), each secondary element (ANG₁, ANG₂, ... ANG_{K}) being able to assume s values,
/c/ generating, by the encoding electronic circuit (ENC), an indexed set of R encoded elements comprising K encoded main elements, R being an integer between K+1 and N, using the function P and an injective function TR having as a starting set the set of the N indexes of the indexed set of N possible elements and having as a target set the starting set of the function P with the starting set of the function TR removed, generating the encoded element of index i of the indexed set of R encoded elements comprising generating s+1 components (E_VICᵢ, E_ANG_{1,i}, E_ANG_{2,¡}, ... E_ANG_{s,i}), namely:
/c1/ when the index i is not equal to any of the indexes of the K main elements (VIC₁, VIC₂, ... VIC_{K}) in the indexed set of N possible elements, generating, by the encoding electronic circuit (ENC), s+1 simulated components, and
/c2/ when the index i is equal to the index of one (VlCⱼ) of the K main elements (VIC₁, VIC₂, ... VIC_{K}) in the indexed set of N possible elements,
/c2A/ generating, by the encoding electronic circuit (ENC), an encoded main element in the form of a component (E_VICᵢ) equal to P(i) at a first defined position of the generated components,
/c2B/ generating, by the encoding electronic circuit (ENC), a component (E_ANG_{f(ANGj),i}) obtained using P(TR(i)) at a second defined position of the generated components, the second defined position being a function of the secondary element (ANGⱼ) corresponding to the main element (VlCⱼ) whose index in the indexed set of N possible elements is the index i, and
/c2C/ generating, by the encoding electronic circuit (ENC), s-1 simulated components (E_ANG_{1,i}, E_ANG_{2,i}, ... E_ANG_{f(ANGj)-1,i}, E_ANG_{f(ANGj)+1,i}, ... E_ANG_{s,i}).

2. Method for biometric enrollment, comprising:
/1/ obtaining, by an enrollment electronic circuit, a reference biometric print of a user,
/2/ extracting, by the enrollment electronic circuit, from the reference biometric print, K main elements (VIC₁, VIC₂, ... VIC_{K}) each corresponding to a characteristic of the reference biometric print, and K secondary elements (ANG₁, ANG₂, ... ANG_{K}) each corresponding to at least one parameter of each of the respective K main elements (VIC₁, VIC₂, ... VIC_{K}),
/3/ obtaining, by the enrollment electronic circuit, an indexing of the K main elements (VIC₁, VIC₂, ... VIC_{K}) relative to an indexed set of N possible elements, this set being a database of biometric print characteristics,
/4/ obtaining, by the enrollment electronic circuit, an indexed set of R elements resulting from the encoding of the K main elements and the K secondary elements using a secret function P according to the method of claim 1.

3. Method for decoding information represented in the form of a secret function, using an indexed set of R encoded elements, of K' presumed main elements and of K' presumed secondary elements, comprising:
/d/ obtaining, by a decoding electronic circuit (DEC), the indexed set of R encoded elements,
/e/ obtaining, by the decoding electronic circuit (DEC), the respective indexes of the K' presumed main elements (VIC'₁, VIC'₂, ... VIC'_{K'}), each corresponding to an element of an indexed set of N possible elements used for obtaining the indexed set of R encoded elements, in this indexed set of N possible elements,
/f/ obtaining, by the decoding electronic circuit (DEC), the K' presumed secondary elements (ANG'₁, ANG'₂, ... ANG'_{K'}) respectively associated with the K' presumed main elements (VIC'₁, VIC'₂, ... VIC'_{K'}), each secondary element (ANG'₁, ANG'₂, ... ANG'_{K'}) being able to assume s values,
/g/ extracting, by the decoding electronic circuit (DEC), each encoded element whose index in the indexed set of R encoded elements is equal to the index of one of the K' presumed main elements (VIC'₁, VIC'₂, ... VIC'_{K'}) in the indexed set of N possible elements,
/h/ for each encoded element so extracted, obtaining, by the decoding electronic circuit (DEC), from said encoded element, a first point whose abscissa is the index of said encoded element in the indexed set of R encoded elements and whose ordinate is the value of the component (E_VIC'ᵢ) located at a first defined position of said encoded element, and a second point whose abscissa is the result of applying a given injective function TR to the index of said encoded element in the indexed set of R encoded elements and whose ordinate is the value of the component (E_ANG'_{f(ANG'j),i}) located at a second defined position of said encoded element, the second defined position being a function of the presumed secondary element (ANG'ⱼ) corresponding to the presumed main element (VIC'ⱼ) whose index in the indexed set of N possible elements is the same as the index of said encoded element in the indexed set of R encoded elements,
/i/ obtaining, by the decoding electronic circuit (DEC), a function P', by decoding the points thus obtained.

4. Method for biometric authentication, comprising:
/5/ obtaining, by an authentication electronic circuit, a function P and an indexed set of R encoded elements,
/6/ obtaining, by the authentication electronic circuit, a presumed biometric print of an authentication candidate,
/7/ extracting, by the authentication electronic circuit, from the presumed biometric print, K' presumed main elements (VIC'₁, VIC'₂, ... VIC'_{K'}) each corresponding to a characteristic of the presumed biometric print, and K' presumed secondary elements (ANG'₁, ANG'₂, ... ANG'_{K'}) each corresponding to at least one parameter of each of the respective K' presumed main elements (VIC'₁, VIC'₂, ... VIC'_{K'}),
/8/ obtaining, by the authentication electronic circuit, an indexing of the K' presumed main elements (VIC'₁, VIC'₂, ... VIC'_{K'}) relative to an indexed set of N possible elements, this set being a database of biometric print characteristics,
/9/ obtaining, by the authentication electronic circuit, a function P' by decoding, according to the method of claim 3, from the indexed set of R encoded elements, the K' presumed main elements and the K' presumed secondary elements,
/10/ authenticating, by the authentication electronic circuit, the candidate if the function P' corresponds to the function P.

5. Electronic circuit (ENC) for encoding K main elements and K secondary elements using a secret function P, comprising:
an obtaining electronic circuit for obtaining respective indexes of K main elements (VIC₁, VIC₂, ... VIC_{K}), each corresponding to an element of an indexed set of N possible elements, in this indexed set of N possible elements,
an obtaining electronic circuit for obtaining K secondary elements (ANG₁, ANG₂, ... ANG_{K}) respectively associated with the K main elements (VIC₁, VIC₂, ... VIC_{K}), each secondary element (ANG₁, ANG₂, ... ANG_{K}) being able to assume s values,
a generating electronic circuit for generating an indexed set of R encoded elements, using the function P and an injective function TR having for the starting set the set of N indexes of the indexed set of N possible elements and having for the target set the starting set of the function P with the starting set of the function TR removed, the generation of the encoded element of index i of the indexed set of R encoded elements comprising the generation of s+1 components (E_VICᵢ, E_ANG_{1,i}, E_ANG_{2,i},... E_ANG_{s,i}),
the generating electronic circuit being arranged, when the index i is not equal to any of the indexes of the K main elements (VIC₁, VIC₂, ... VIC_{K}) in the indexed set of N possible elements, to generate s+1 simulated components, and
the generating electronic circuit being arranged, when the index i is equal to the index of one (VICⱼ) of the K main elements (VIC₁, VIC₂, ... VIC_{K}) in the indexed set of N possible elements, to generate a component (E_VICᵢ) equal to P(i) at a first defined position of the generated components, to generate a component (E_ANG_{f(ANGj),i}) obtained based on P(TR(i)) at a second defined position of the generated components, the second defined position being a function of the secondary element (ANGⱼ) corresponding to the main element (VlCⱼ) whose index in the indexed set of N possible elements is the index i, and to generate s-1 simulated components (E_ANG_{1,i}, E_ANG_{2,i}, ... E_ANG_{f(ANGj)-1,i}, E_ANG_{f(ANGj)+1,i}, ... E_ANG_{s,i}).

6. Electronic circuit for biometric enrollment, comprising:
an obtaining electronic circuit for obtaining a reference biometric print of a user,
an extracting electronic circuit for extracting, from the reference biometric print, K main elements (VIC₁, VIC₂, ... VIC_{K}) each corresponding to a characteristic of the reference biometric print, and K secondary elements (ANG₁, ANG₂, ... ANG_{K}) each corresponding to at least one parameter of each of the respective K main elements (VIC₁, VIC₂, ... VIC_{K}),
an obtaining electronic circuit for obtaining an indexing of the K main elements (VIC₁, VIC₂, ... VIC_{K}) relative to an indexed set of N possible elements, this set being a database of biometric print characteristics,
an obtaining electronic circuit for obtaining an indexed set of R elements resulting from encoding the K main elements and the K secondary elements using a secret function P by means of the encoding electronic circuit according to claim 5.

7. Information decoding electronic circuit (DEC) for decoding information represented in the form of a secret function, from an indexed set of R encoded elements, K' presumed main elements and K' presumed secondary elements, comprising:
an obtaining electronic circuit for obtaining the indexed set of R encoded elements,
an obtaining electronic circuit for obtaining the respective indexes of the K' presumed main elements (VIC'₁, VIC'₂, ... VIC'_{K'}), each corresponding to an element of an indexed set of N possible elements used for obtaining the indexed set of R encoded elements, in this indexed set of N possible elements, an obtaining electronic circuit for obtaining the K' presumed secondary elements (ANG'₁, ANG'₂, ... ANG'_{K'}) respectively associated with the K' presumed main elements (VIC'₁, VIC'₂, ... VIC'_{K'}), each secondary element (ANG'₁, ANG'₂, ... ANG'_{K'}) being able to assume s values,
an extracting electronic circuit for extracting each encoded element whose index in the indexed set of R encoded elements is equal to the index of one of the K' presumed main elements (VIC'₁, VIC'₂, ... VIC'_{K'}) in the indexed set of N possible elements,
an obtaining electronic circuit for obtaining, for each encoded element so extracted, based on said encoded element, a first point whose abscissa is the index of said encoded element in the indexed set of R encoded elements and whose ordinate is the value of the component (E_VIC'ᵢ) located at a first defined position of said encoded element, and a second point whose abscissa is the result of applying a given injective function TR to the index of said encoded element in the indexed set of R encoded elements and whose ordinate is the value of the component (E_ANG'_{f(ANG'j),i}) located at a second defined position of said encoded element, the second defined position being a function of the presumed secondary element (ANG'ⱼ) corresponding to the presumed main element (VIC'ⱼ) whose index in the indexed set of N possible elements is the same as the index of said encoded element in the indexed set of R encoded elements,
an obtaining electronic circuit for obtaining a function P', by decoding the points so obtained.

8. Electronic circuit for biometric authentication, comprising:
an obtaining electronic circuit for obtaining a function P and an indexed set of R encoded elements,
an obtaining electronic circuit for obtaining a presumed biometric print of an authentication candidate,
an extracting electronic circuit for extracting, from the presumed biometric print, K' presumed main elements (VIC'₁, VIC'₂, ... VIC'_{K'}) each corresponding to a characteristic of the presumed biometric print, and K' presumed secondary elements (ANG'₁, ANG'₂, ... ANG'_{K'}) each corresponding to at least one parameter of each of the respective K' presumed main elements (VIC'₁, VIC'₂, ... VIC'_{K'}),
an obtaining electronic circuit for obtaining an indexing of the K' presumed main elements (VIC'₁, VIC'₂, ... VIC'_{K'}) relative to an indexed set of N possible elements, this set being a database of biometric print characteristics,
an obtaining electronic circuit for the obtaining a function P' by decoding (DEC), by means of the electronic circuit according to claim 7 from the indexed set of R encoded elements, the K' presumed main elements and the K' presumed secondary elements,
a verification electronic circuit, arranged to authentication the candidate if function P' corresponds to function P.

9. Computer program comprising a sequence of instructions which, when executed by a processor, cause the processor to carry out a method according to one of claims 1 to 4.

10. Non-transitory computer-readable storage medium, said medium storing a computer program according to claim 9.
